# EUROPEAN PATENT APPLICATION

(11) **EP 4 317 023 A1**
(43) Date of publication of application: **07.02.2024**
(21) Application number: 22780189.1
(22) Date of filing: 17.03.2022
(51) Int. Cl.: B65G 1/00

(54) **STOREHOUSE**

(30) Priority: 31.03.2021 JP 2021059430
(71) Applicant: Daikin Industries, Ltd., Osaka-shi, Osaka 530-0001 (JP)
(72) Inventor: MATSUI, Hidenori, Osaka-shi, Osaka 530-8323 (JP); SATO, Kiichiro, Osaka-shi, Osaka 530-8323 (JP); MUKAIDANI, Toshiaki, Osaka-shi, Osaka 530-8323 (JP); YAMAUCHI, Junko, Osaka-shi, Osaka 530-8323 (JP); INOUE, Hiroko, Osaka-shi, Osaka 530-8323 (JP); KATADA, Chiharu, Osaka-shi, Osaka 530-8323 (JP)
(74) Representative: Hoffmann Eitle
(86) International application number: PCT/JP2022/012365
(87) International publication number: WO 2022/209970

(57) **Abstract**

A storage provided with a temperature adjustment area for storing an article, includes an arrangement determining unit configured to determine an arrangement in the temperature adjustment area, of an article to be stored in the temperature adjustment area or an article that is stored in the temperature adjustment area, according to status information of the temperature adjustment area and a temperature relating to the article.

## Description

### [Technical Field]

The present disclosure relates to a storage.

### [Background Art]

Conventionally, techniques for temperature management of packages to be delivered have been known. For example, in the case of managing the temperature in a heat preservation cold insulation container containing a package, in a case of transporting multiple heat preservation cold insulation containers having different temperatures to be managed, such as when there are normal temperature packages and refrigerated (frozen) packages are transported by a single transport truck, it has been necessary to appropriately adjust the temperature of each heat preservation cold insulation container (see, for example, Patent Document 1).

### [Citation List]

### [Patent Document]

(Patent document 1) WO 2018/155408

### [Summary of Invention]

### [Technical Problem]

For example, in a storage for storing a plurality of articles requiring temperature management, there has been a possibility that the temperature of other articles in the storage may be affected, such as when an article which has not been precooled is put in the storage. Further, for example, in a storage for storing a plurality of articles requiring temperature management, detailed temperature management of the articles during storage, by taking into consideration the temperature unevenness in the storage, has not been possible.

An object of the present disclosure is to provide a storage for appropriately managing the temperature of the articles in a temperature adjustment area.

### [Solution to Problem]

A storage according to the present disclosure is provided with a temperature adjustment area for storing an article, the storage including
an arrangement determining unit configured to determine an arrangement in the temperature adjustment area, of an article to be stored in the temperature adjustment area or an article that is stored in the temperature adjustment area, according to status information of the temperature adjustment area and a temperature relating to the article.

According to the present disclosure, the arrangement in the temperature adjustment area of articles to be stored in the temperature adjustment area or articles that are stored in the temperature adjustment area in the temperature adjustment area can be determined according to the status information of the temperature adjustment area and the temperature of the articles, and, therefore, it is possible to provide a storage for appropriately managing the temperature of the articles in the temperature adjustment area.

Further, the storage may include
an automatic conveyance unit configured to arrange the article in the temperature adjustment area, based on the arrangement determined by the arrangement determining unit.

According to the present disclosure, the articles can be arranged in the temperature adjustment area based on the arrangement determined by the arrangement determining unit.

Further, the storage may include
a partition moving unit configured to move a partition unit that partitions the temperature adjustment area, wherein
the status information of the temperature adjustment area may include information relating to the temperature adjustment area that is partitioned by the partition unit and that changes according to a movement of the partition unit.

According to the present disclosure, the arrangement in the temperature adjustment area of articles to be stored in the temperature adjustment area or articles that are stored in the temperature adjustment area can be determined in accordance with the information on the temperature adjustment area divided by the partition unit.

Further, the storage may include
a position information output unit configured to output position information of the partition moving unit, based on the arrangement determined by the arrangement determining unit, wherein
the partition moving unit may move the partition unit based on the position information of the partition moving unit.

According to the present disclosure, the partition unit can be moved based on the arrangement determined by the arrangement determining unit.

Further, the automatic conveyance unit may be provided with a sensor configured to measure the temperature of the article.

According to the present disclosure, the temperature of the article to be stored in the temperature adjustment area or the article that is stored in the temperature adjustment area can be measured.

Further, the automatic conveyance unit may be provided with a sensor configured to read information relating to the article, and
the arrangement determining unit determines the arrangement of the article in the temperature adjustment area in consideration of the information relating to the article.

According to the present disclosure, the arrangement of the article in the temperature adjustment area can be determined in consideration of the information relating to the article by reading information relating to the article to be stored in the temperature adjustment area or the article that is stored in the temperature adjustment area.

Further, the status information of the temperature adjustment area may include at least one of information relating to division of the temperature adjustment area, information relating to a temperature distribution of the temperature adjustment area, or information relating to the article stored in the temperature adjustment area.

According to the present disclosure, the arrangement in the temperature adjustment area of the article to be stored in the temperature adjustment area or the article that is stored in the temperature adjustment area can be determined according to the information relating to the division of the temperature adjustment area, information relating to the temperature distribution of the temperature adjustment area, and information relating to the article stored in the temperature adjustment area.

Further, the arrangement determining unit may set an arrangement destination of the article having a temperature that deviates from a set temperature as an area that does not affect the temperature adjustment area, the set temperature being a temperature at which the temperature adjustment area is to be maintained, and the temperature that deviates from the set temperature deviating by greater than or equal to a predetermined value.

According to the present disclosure, the article having a temperature that deviates from a set temperature at which the temperature adjustment area is to be maintained, by greater than or equal to a predetermined value, can be arranged in an area that does not affect the temperature adjustment area.

### [Brief Description of Drawings]

[FIG. 1] FIG. 1 is an external view of an example of a storage according to the present embodiment.
[FIG. 2A] FIG. 2A is a cross-sectional view of an example of a storage according to the present embodiment.
[FIG. 2B] FIG. 2B is a plan view of an example of a storage according to the present embodiment.
[FIG. 3] FIG. 3 is a hardware configuration diagram of an example of a computer according to the present embodiment.
[FIG. 4] FIG. 4 is a configuration diagram of an example of a storage according to the present embodiment.
[FIG. 5] FIG. 5 is a configuration diagram of an example of a storage according to the present embodiment.
[FIG. 6] FIG. 6 is an explanatory diagram of an example of an operation outline of a storage according to the present embodiment.
[FIG. 7] FIG. 7 is an explanatory diagram illustrating an example of a procedure for inputting articles in a storage according to the present embodiment.
[FIG. 8A] FIG. 8A is a configuration diagram of an example of article data.
[FIG. 8B] FIG. 8B is a configuration diagram of an example of shelf management data.
[FIG. 8C] FIG. 8C is a configuration diagram of an example of article data.
[FIG. 9A] FIG. 9A is a configuration diagram of an example of article data.
[FIG. 9B] FIG. 9B is a configuration diagram of an example of shelf management data.
[FIG. 9C] FIG. 9C is a configuration diagram of an example of article data.
[FIG. 10] FIG. 10 is an explanatory diagram illustrating an example of the rearrangement processing procedure of the article in the storage according to the present embodiment.
[FIG. 11A] FIG. 11A is a configuration diagram of an example of article data.
[FIG. 11B] FIG. 11B is a configuration diagram of an example of article data.
[FIG. 11C] FIG. 11C is a configuration diagram of an example of shelf management data.
[FIG. 12A] FIG. 12A is an explanatory diagram illustrating an example of setting a temperature management grade.
[FIG. 12B] FIG. 12B is an explanatory diagram illustrating an example of setting a temperature management grade.
[FIG. 13] FIG. 13 is an explanatory diagram illustrating an example of a processing procedure for adjusting a storage area of a storage according to the present embodiment.
[FIG. 14A] FIG. 14A is a configuration diagram of an example of shelf management data.
[FIG. 14B] FIG. 14B is a configuration diagram of an example of shelf management data.
[FIG. 14C] FIG. 14C is a configuration diagram of an example of shelf management data.
[FIG. 15A] FIG. 15A is an explanatory diagram of an example of movement of a partition plate of a storage according to the present embodiment.
[FIG. 15B] FIG. 15B is an explanatory diagram of an example of movement of the partition plate of the storage according to the present embodiment.
[FIG. 16A] FIG. 16A is an explanatory diagram of an example of a mechanism for changing the position of the partition plate.
[FIG. 16B] FIG. 16B is an explanatory diagram of an example of a mechanism for changing the position of the partition plate.
[FIG. 17A] FIG. 17A is an explanatory diagram of an example of a mechanism for changing the position of the partition plate.
[FIG. 17B] FIG. 17B is an explanatory diagram of an example of a mechanism for changing the position of the partition plate.
[FIG. 18] FIG. 18 is an explanatory diagram of an example of a mechanism for changing the position of the partition plate.
[FIG. 19] FIG. 19 is an explanatory diagram of an example of a mechanism for changing the position of the partition plate.
[FIG. 20] FIG. 20 is an explanatory diagram of an example of a mechanism for changing the position of the partition plate.
[FIG. 21] FIG. 21 is an explanatory diagram of an example of a mechanism for changing the position of the partition plate.
[FIG. 22] FIG. 22 is an explanatory diagram of an example of a mechanism for changing the position of the partition plate.
[FIG. 23] FIG. 23 is an explanatory diagram of an example of a mechanism for changing the position of the partition plate.
[FIG. 24A] FIG. 24A is an explanatory diagram of an example of a mechanism for changing the position of the partition plate.
[FIG. 24B] FIG. 24B is an explanatory diagram of an example of a mechanism for changing the position of the partition plate.
[FIG. 24C] FIG. 24C is an explanatory diagram of an example of a mechanism for changing the position of the partition plate.

### [Description of Embodiments]

Embodiments of the present invention will now be described in detail.

### <Appearance>

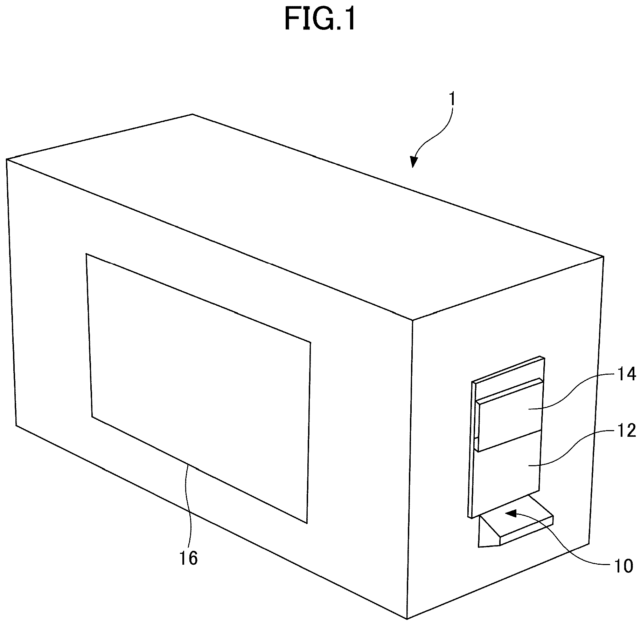

FIG. 1 is an external view of an example of a storage according to the present embodiment. A storage 1 of FIG. 1 can be implemented by using a portable refrigeration and freezing container which is a shipping container, for example. The refrigeration and freezing container has a refrigeration and freezing function and implements a storage area which is an example of a temperature management area using the refrigeration and freezing function. The temperature of the storage area is controlled by the refrigeration and freezing function. The quality of the articles stored in the storage 1 is maintained by temperature control.

The storage 1 illustrated in FIG. 1 has a inputting function for inputting articles into the storage area and a retrieving function for retrieving the articles stored in the storage area. The inputting function and the retrieving function can be implemented by using, for example, an operation panel 10 and a receiving device 20 described later. The operation panel 10 includes, for example, an operation receiving unit for receiving an operation from a user and an information output unit for displaying information on a screen or outputting information by voice sound to the user. The operation receiving unit includes a physical button for receiving an operation from the user, a touch screen, a microphone for voice sound input, and the like. The information output unit includes, for example, a display device, a speaker, and the like. The receiving device 20 described later receives an operation for inputting an article received from the user by the operation panel 10 or an operation for taking out an article from the user, and implements various kinds of control described later.

The receiving device 20 of the storage 1 illustrated in FIG. 1 includes an inputting/retrieving port 12 for articles. The article input to the inputting/retrieving port 12 by the user can be conveyed to the storage area by an automatic conveyance device 24 described later. The article being stored in the storage area can be conveyed to the inputting/retrieving port 12 by the automatic conveyance device 24.

The inputting/retrieving port 12 in FIG. 1 may be provided with a door 14 that can be opened/closed. FIG. 1 illustrates a state in which the door 14 is opened. Further, the storage 1 illustrated in FIG. 1 may be provided with a mechanism for improving the efficiency of inputting articles in addition to the inputting/retrieving port 12.

For example, the storage 1 illustrated in FIG. 1 is provided with a door 16 on a side surface, and the door 16 is opened so that articles can be directly input to a shelf in the storage area to be described later. Further, the storage 1 illustrated in FIG. 1 may be provided with the door 16 on a side surface, and a plurality of articles can be input to a temporary storage place by opening the door 16. The storage 1 determines the arrangement of the articles entered from the door 16 in the storage area as described later, and the articles can be conveyed by the automatic conveyance device 24.

The configuration of the storage 1 in FIG. 1 is an example. For example, if the storage 1 is connected to a server such as a cloud server via a network such as the Internet, at least a part of an information processing function may be provided in the server. The storage 1 may use an information terminal such as a smartphone held by a user in place of the operation panel 10. It is obvious that the storage 1 illustrated in FIG. 1 has various configuration examples depending on the use and purpose.

### <Cross-sectional view and plan view>

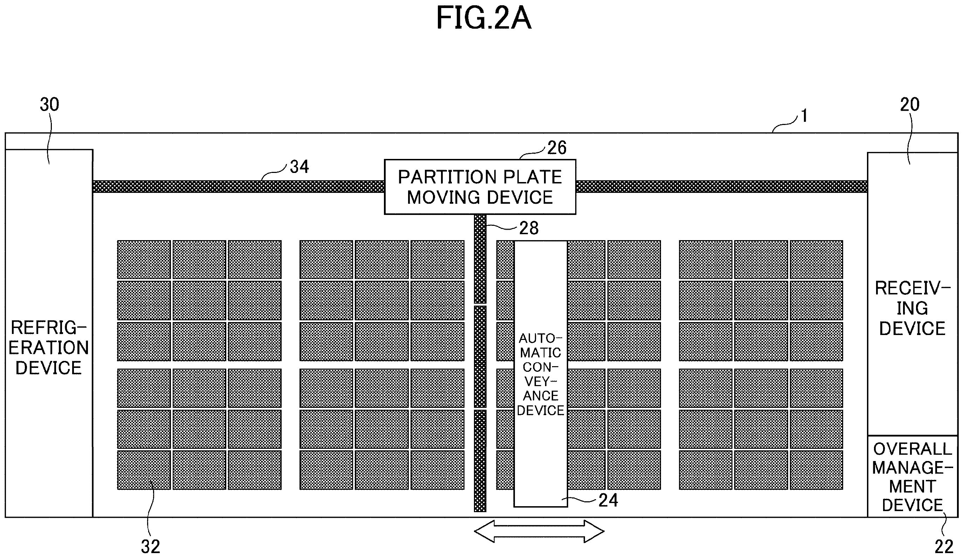

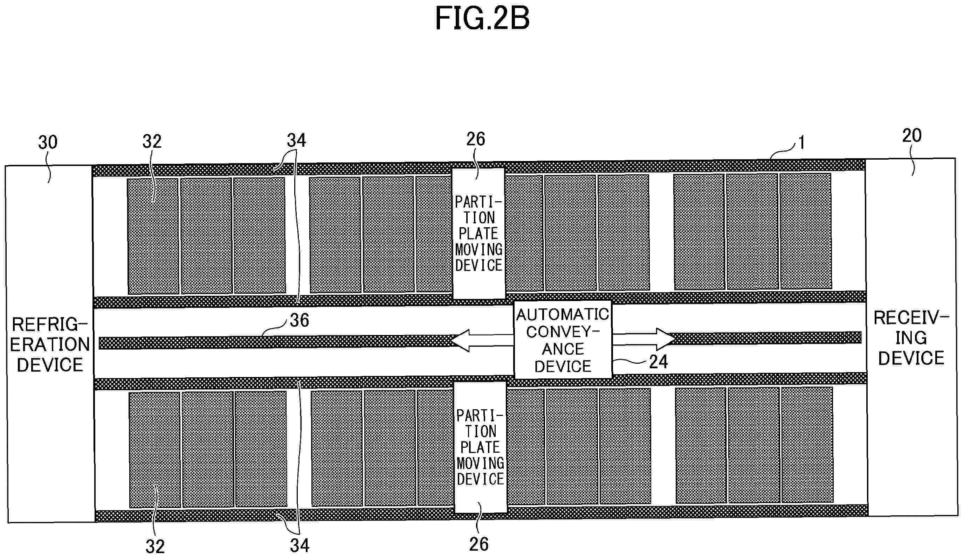

FIG. 2A is a cross-sectional view of an example of a storage according to the present embodiment. FIG. 2B is a plan view of an example of a storage according to the present embodiment. FIG. 2A is a cross-sectional view in the longitudinal direction of the storage 1. FIG. 2B is a plan view of the storage 1. The storage 1 includes a refrigeration device 30 providing refrigeration and freezing function at one end in the longitudinal direction, and the receiving device 20 and an overall management device 22 at the other end. The storage 1 implements a storage area provided with a plurality of shelves 32 by the refrigeration and freezing function of the refrigeration device 30.

Each of the plurality of shelves 32 in the storage area has a shelf address. The article stored in the storage 1 is conveyed from the receiving device 20 to the shelf 32 of the storage area by the automatic conveyance device 24 capable of moving in the storage area along a bottom rail 36. Further, the automatic conveyance device 24 can convey the article from one shelf 32 to another different shelf 32 in order to perform the rearrangement described later. Further, the article retrieved from the storage 1 is conveyed from the shelf 32 of the storage area to the receiving device 20 by the automatic conveyance device 24.

The shelf 32 of the storage 1 in FIGS. 2A and 2B is installed on both side surfaces so that an article can be input from the door 16 on the side surface. The storage 1 in FIGS. 2A and 2B illustrates an example in which two rows of shelves 32 are installed, each row including 6 shelves in the vertical direction and 12 shelves in the width direction. In the storage 1 in FIGS. 2A and 2B, a gap for installing a partition plate 28 is provided for each of the three shelves 32 in the horizontal direction. A partition plate moving device 26 and a temperature adjusting device 27 described later move along a rail 34 to move the installation position of the partition plate 28 as described later.

By installing the partition plate 28 in the storage 1 of FIGS. 2A and 2B, the storage areas (temperature zones) having a plurality of set temperatures can be implemented. By moving the installation position of the partition plate 28 in the storage 1 of FIGS. 2A and 2B, the number of articles (capacity of the storage area) that can be stored in each storage area can be adjusted.

The overall management device 22 controls the operation of the automatic conveyance device 24, the refrigeration device 30, and the partition plate moving device 26 based on the user's operation received from the operation panel 10 to implement the storage 1 according to the present embodiment.

### <Hardware configuration>

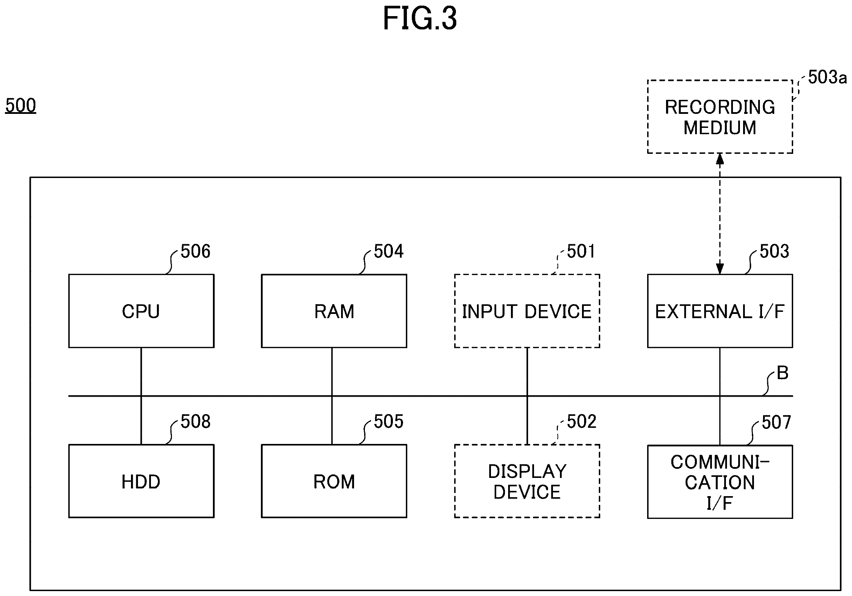

The overall management device 22 illustrated in FIG. 1 is implemented, for example, by a computer 500 having the hardware configuration illustrated in FIG. 3.

FIG. 3 is a hardware configuration diagram of an example of a computer according to the present embodiment. The computer 500 of FIG. 3 includes an input device 501, a display device 502, an external I/F 503, a RAM 504, a ROM 505, a CPU 506, a communication I/F 507, and an HDD 508, each of which being connected to each other by a bus B. The input device 501 and the display device 502 may be configured to be connected and used.

The input device 501 may be a touch panel, an operation key, a button, a keyboard, a mouse, or the like used by the user to input various signals. The display device 502 is formed of a display such as a liquid crystal or an organic EL for displaying a screen, and a speaker for outputting sound data such as voice sound or music. The communication I/F 507 is an interface for data communication by the computer 500.

The HDD 508 is an example of a non-volatile storage device for storing programs and data. The programs and data stored include an OS, which is basic software for managing the entire computer 500, and applications that provide various functions on the OS. The computer 500 may use a drive device (e.g., a solid-state drive: SSD, etc.) that uses a flash memory as a storage medium in place of the HDD 508.

The external I/F 503 is an interface with an external device. An external device includes a recording medium 503a. Thus, the computer 500 can read and/or write information from/in the recording medium 503a via the external I/F 503. The recording medium 503a includes a flexible disk, a CD, a DVD, an SD memory card, and a USB memory.

The ROM 505 is an example of a nonvolatile semiconductor memory (storage device) that can hold programs and data even when the power is turned off. The ROM 505 stores programs such as BIOS that is executed when the computer 500 is started, OS settings, and network settings, and data. The RAM 504 is an example of a volatile semiconductor memory (storage device) that temporarily holds programs and data.

The CPU 506 is a computing device that implements control and functions of the entire computer 500 by reading programs and data from storage devices such as the ROM 505 and the HDD 508 onto the RAM 504 and executing processing. The overall management device 22 according to the present embodiment can implement various functions as described later.

### <Configuration>

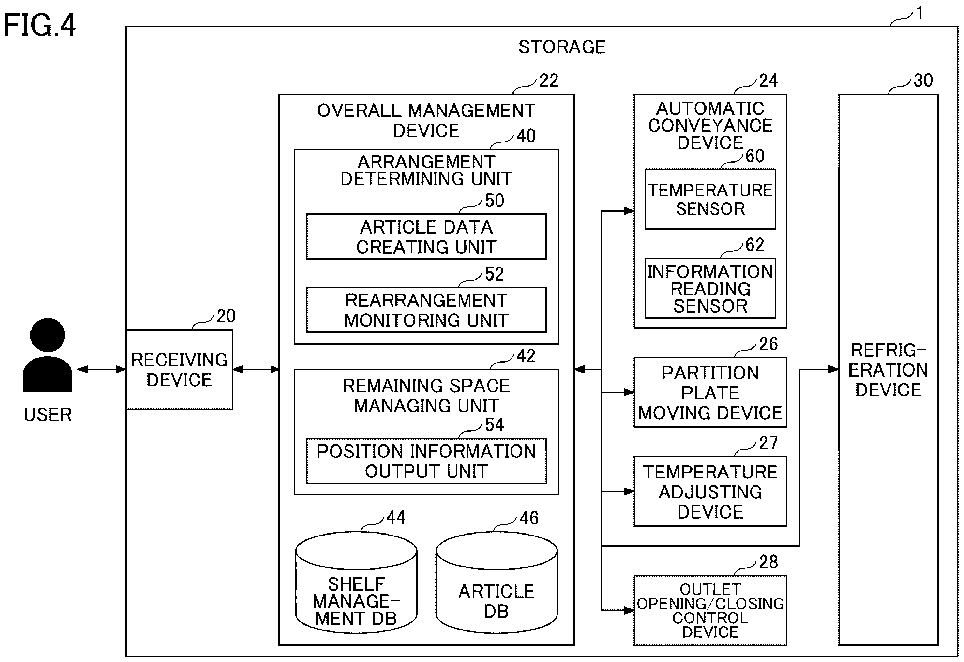

The configuration of the storage 1 according to the present embodiment will be described below. FIG. 4 is a configuration diagram of an example of the storage according to the present embodiment. Note that the configuration diagram of FIG. 4 appropriately omits portions unnecessary for the description of the present embodiment.

The storage 1 illustrated in FIG. 4 includes the receiving device 20, the overall management device 22, the automatic conveyance device 24, the partition plate moving device 26, the temperature adjusting device 27, an outlet opening/closing control device 29, and the refrigeration device 30.

The receiving device 20 receives an operation for inputting an article from the user or an operation for retrieving an article from the user, and reports, to the overall management device 22, the operation content received from the user. The overall management device 22 performs various kinds of control such as control of the automatic conveyance device 24 according to the reported operation content of the user. Further, the overall management device 22 performs various kinds of control such as control of the automatic conveyance device 24, the partition plate moving device 26, the temperature adjusting device 27, and the refrigeration device 30 in order to make rearrangements described later and adjust the amount of space remaining in the plurality of temperature zones described later.

The overall management device 22 includes an arrangement determining unit 40, a remaining space managing unit 42, a shelf management DB 44, and an article DB 46. The arrangement determining unit 40 includes an article data creating unit 50 and a rearrangement monitoring unit 52. The remaining space managing unit 42 includes a position information output unit 54.

The arrangement determining unit 40 determines the shelf 32 for arranging articles to be stored in the storage area or articles that are stored in the storage area. The article data creating unit 50 creates article data of articles stored in the storage area. The article data is recorded in the article DB 46. Details of the article data will be described later. The rearrangement monitoring unit 52 uses the article data and the shelf management data to manage the rearrangement of the article being stored in the storage area. The shelf management data is recorded in the shelf management DB 44. Details of the shelf management data will be described later.

The remaining space managing unit 42 uses the shelf management data to manage the number of articles that can be stored in each of a plurality of temperature zones (remaining space for each storage area with different set temperatures). The position information output unit 54 outputs the position information of the partition plate 28 for moving the installation position of the partition plate 28 in accordance with a plan for changing the position of the partition plate 28 of the remaining space managing unit 42.

The automatic conveyance device 24 includes a temperature sensor 60 and an information reading sensor 62. The automatic conveyance device 24 conveys the article input from the inputting/retrieving port 12 to the storage area, conveys the stored article from the storage area to the inputting/retrieving port 12, conveys the article from one shelf 32 to another shelf 32, etc., in accordance with an instruction from the overall management device 22. The automatic conveyance device 24 can use an existing conveyance device such as a conveyance robot or a conveyance technology by an automatic machine.

The temperature sensor 60 is a sensor for measuring the temperature of an article. The temperature sensor 60 measures the temperature of the article in the inputting/retrieving port 12, the temperature of the article in the shelf 32, and the like. The information reading sensor 62 is a sensor that reads information about the article. For example, the information reading sensor 62 is a camera that captures a package image of the article or a code image such as a two-dimensional code, and reads information about the article from the captured image. The information reading sensor 62 may be an IC tag reader that reads information about the article from an IC tag attached to the article.

When the partition plate moving device 26 receives an instruction to move the partition plate 28 from the remaining space managing unit 42, the partition plate moving device 26 moves the partition plate 28 based on the position information of the partition plate 28 output by the position information output unit 54. In accordance with an operation instruction from the overall management device 22, the temperature adjusting device 27 adjusts the amount of air blow-out between storage areas having a plurality of set temperatures implemented by the partition plate 28. Further, in accordance with an operation instruction from the overall management device 22, the refrigeration device 30 performs ON/OFF control of the refrigeration and freezing function. The outlet opening/closing control device 29 controls the opening/closing of the door 14 of the inputting/retrieving port 12 in accordance with an instruction from the storage 1, for example.

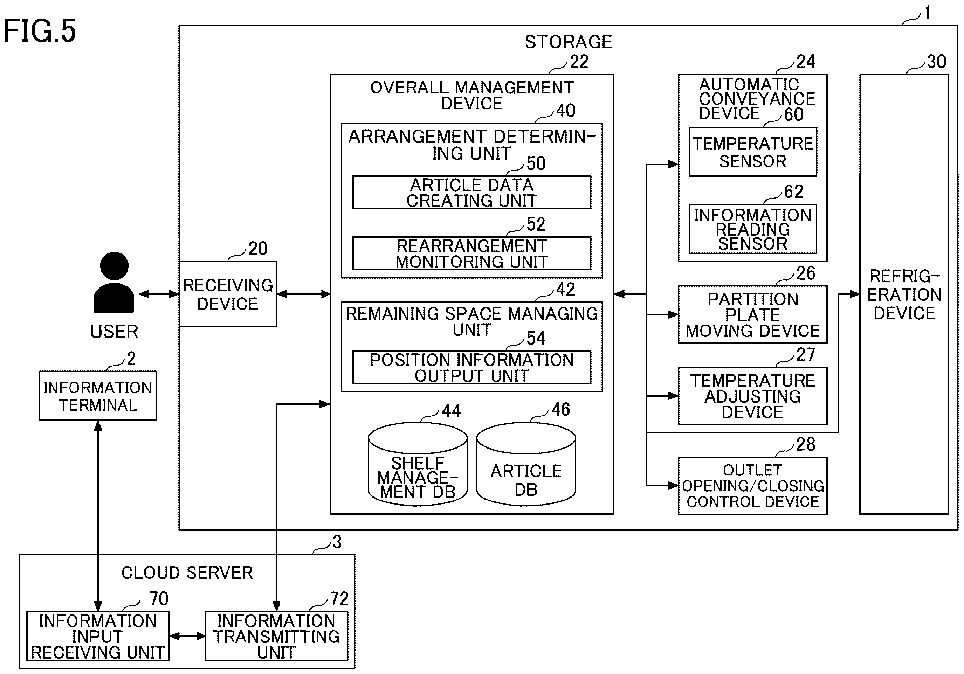

The configuration of FIG. 4 is an example, and may be a configuration as illustrated in FIG. 5. FIG. 5 is a configuration diagram of an example of a storage according to the present embodiment. Note that the configuration diagram of FIG. 5 omits portions unnecessary for the description of the present embodiment as appropriate. A cloud server 3 of FIG. 5 is implemented by one or more of the computers 500 having the hardware configuration illustrated in FIG. 3, for example.

The configuration diagram of FIG. 5 is a configuration in which the storage 1 receives the input information, which is received by the receiving device 20 from a user in the case of FIG. 4, from an information terminal 2 such as a smartphone held by the user via the cloud server 3. The storage 1, the information terminal 2, and the cloud server 3 are connected by a network such as the Internet or a LAN to enable data communication.

The user inputs information to the information terminal 2. The cloud server 3 has an information input receiving unit 70 and an information transmitting unit 72. The information input receiving unit 70 receives the content of the information input by the user to the information terminal 2. The information transmitting unit 72 transmits the content of the information input by the user received by the information input receiving unit 70, to the overall management device 22 of the storage 1. As illustrated in FIG. 5, the information input by the user to the storage 1 can be performed from the receiving device 20 or from the information terminal 2 via the cloud server 3.

As illustrated in FIGS. 4 and 5, the configuration of the storage 1 according to the present embodiment can be considered in various ways. For example, at least a part of the information processing performed by the overall management device 22 of the storage 1 may be performed by the cloud server 3.

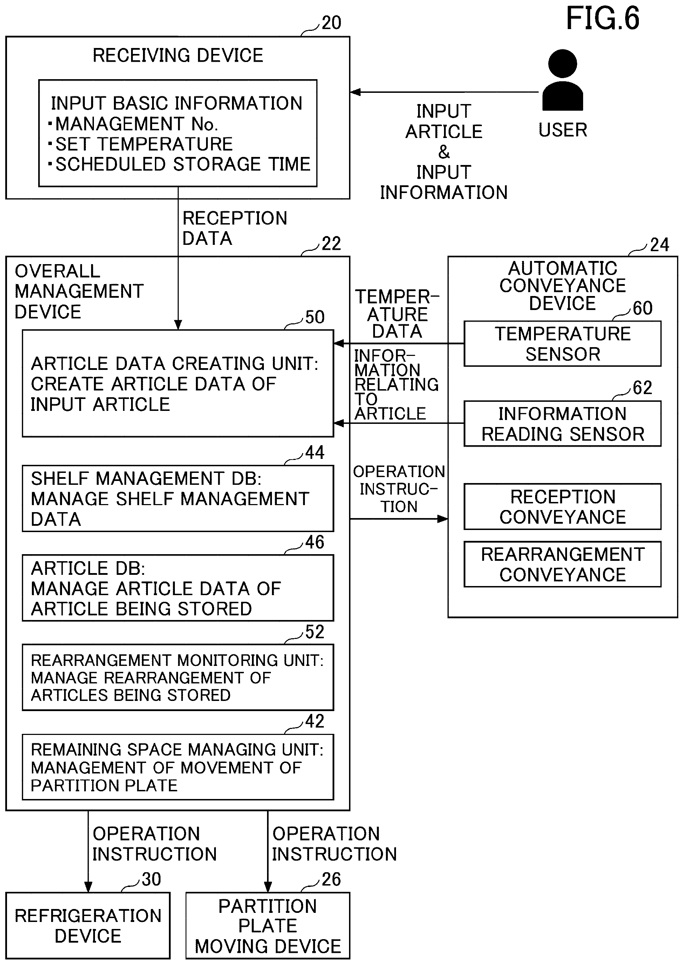

FIG. 6 is an explanatory diagram of an example of an operation outline of the storage according to the present embodiment. FIG. 6 explains the configuration diagram of FIG. 4 as an example. FIG. 6 omits the configurations that are not necessary for explanation.

The receiving device 20 receives the input of the article and the input of the information from the user. FIG. 6 illustrates an example of receiving the input of the management number, the set temperature, and the scheduled storage time as basic information from the user. The management number is an example of the information for managing the input article. The set temperature is the temperature set for the input article that is required during storage. The scheduled storage time is the scheduled storage time of the article input to the storage 1.

The input basic information received by the receiving device 20 from the user is reported to the overall management device 22 as reception data. The overall management device 22 gives an operation instruction to the automatic conveyance device 24 to operate the temperature sensor 60 and the information reading sensor 62 and to convey articles.

The temperature sensor 60 of the automatic conveyance device 24 measures the temperature of the input article in accordance with an operation instruction from the overall management device 22. The temperature sensor 60 measures the temperature of the article to be managed for rearrangement in accordance with an operation instruction from the overall management device 22. The measured temperature data of the article is transmitted to the overall management device 22. The information reading sensor 62 of the automatic conveyance device 24 reads, from the input article, information about the input article in accordance with an operation instruction from the overall management device 22. The read information about the article is transmitted to the overall management device 22. The automatic conveyance device 24 conveys an article, such as for reception conveyance and rearrangement conveyance, in accordance with an operation instruction from the overall management device 22.

The article data creating unit 50 of the overall management device 22 determines the content necessary for the article data such as the position (shelf address) of the shelf 32 at the start of storage of the input article from the received reception data, temperature data, and information on the article, and creates the article data of the input article. The shelf management DB 44 records and manages the shelf management data for managing the shelf 32 at which the shelf address is set. The article DB 46 records and manages the article data of the article being stored in the storage area.

The rearrangement monitoring unit 52 manages the rearrangement of the article to be moved from the shelf 32 on which the article currently is stored to another shelf 32 based on the article data created when the article is input. The remaining space managing unit 42 manages the remaining space of the plurality of temperature zones and determines the necessity of the movement of the partition plate 28 based on the remaining space of the plurality of temperature zones. If the movement of the partition plate 28 is determined to be necessary, the remaining space managing unit 42 of the overall management device 22 instructs the partition plate moving device 26 and the refrigeration device 30 to move the partition plate 28.

For example, the refrigeration device 30 is controlled so that the refrigeration and freezing function is turned off when the partition plate 28 is moved. The partition plate moving device 26 operates so as to change the position of the partition plate 28 according to an operation instruction from the remaining space managing unit 42.

### <Processing>

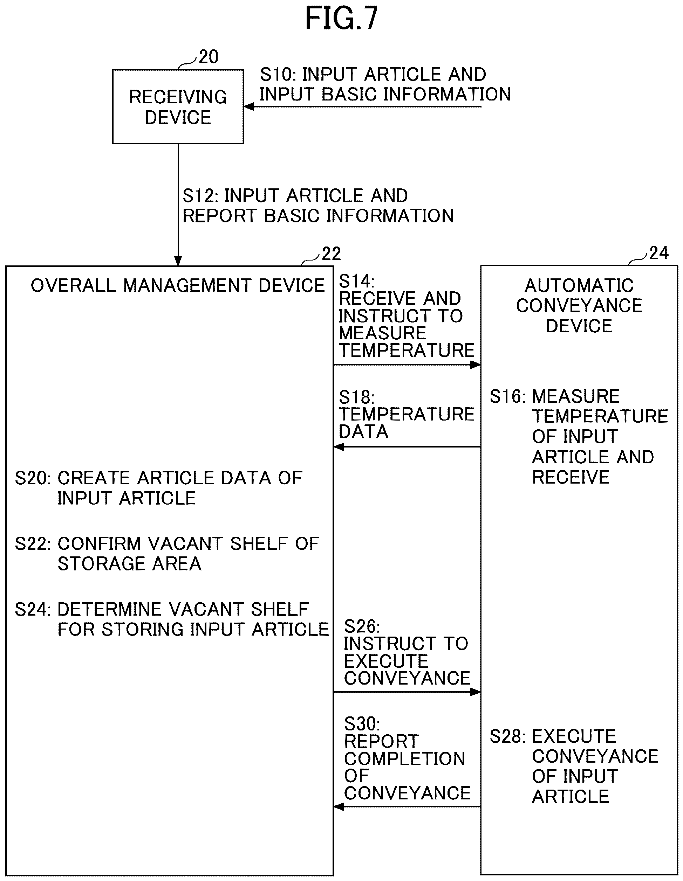

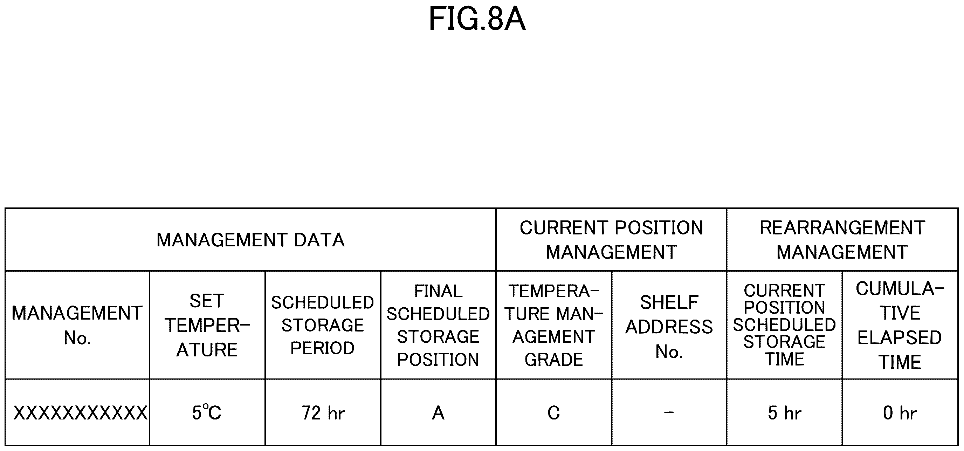

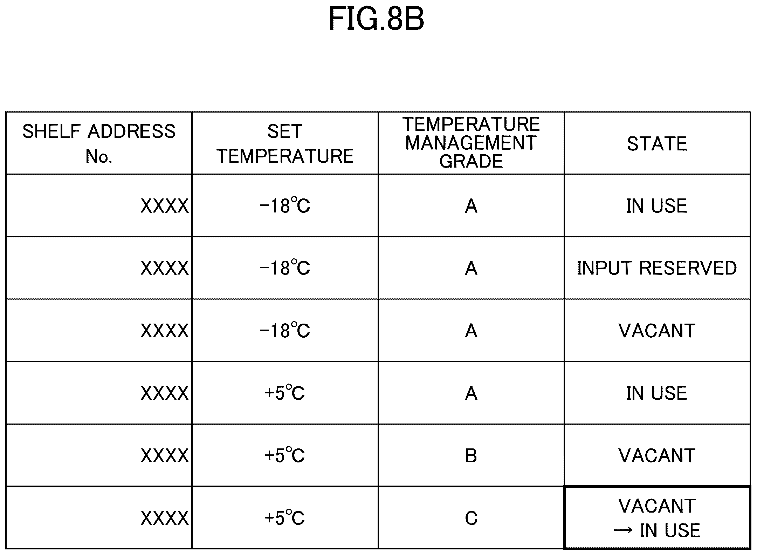

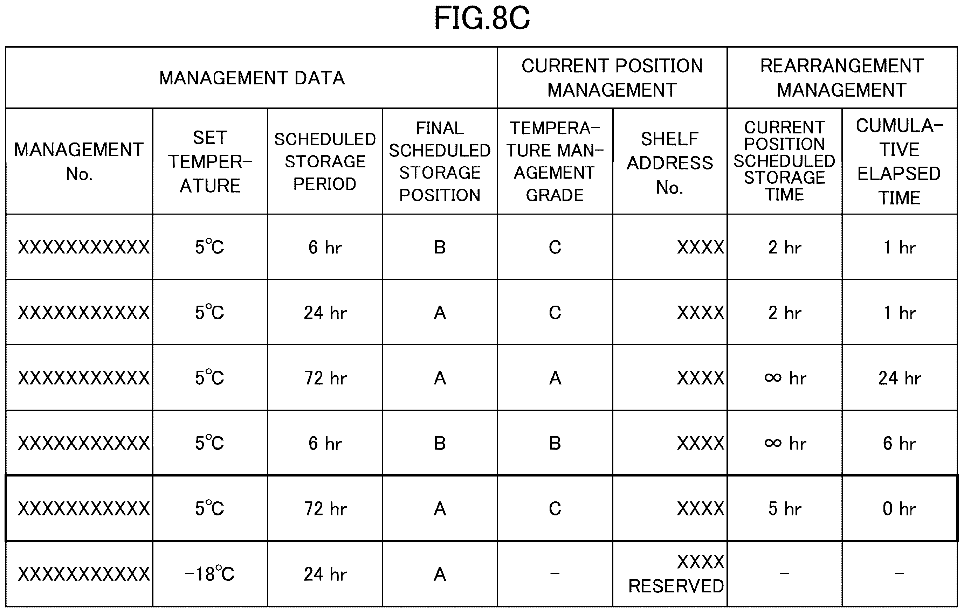

The processing procedure of the storage 1 in the configuration of FIG. 4 will be described below as an example. FIG. 7 is an explanatory diagram illustrating an example of a processing procedure for inputting articles to the storage according to the present embodiment. FIG. 8A is a configuration diagram of an example of the article data. FIG. 8B is a configuration diagram of an example of the shelf management data. FIG. 8C is a configuration diagram of an example of the article data.

A user who wishes to input an article into the storage 1 performs an operation for inputting the article and inputs the basic information to the receiving device 20 in step S10. In step S12, the receiving device 20 reports, to the overall management device 22, the input of the article and the basic information.

In step S14, the overall management device 22 gives an operation instruction to the automatic conveyance device 24 to receive the article which is input (the input article) and to measure the temperature. In step S16, the temperature sensor 60 of the automatic conveyance device 24 measures the temperature of the article input to the inputting/retrieving port 12. The automatic conveyance device 24 performs a process of receiving the article input to the inputting/retrieving port 12. In step S18, the temperature sensor 60 transmits the temperature data of the input article to the overall management device 22.

In step S20, the article data creating unit 50 of the overall management device 22 inputs the reported basic information into the article data items in FIG. 8A, "management number", "set temperature", and "scheduled storage period" in "management data". The article data creating unit 50 determines the temperature management grade based on the current temperature of the input article indicated by the received temperature data and the set temperature in the item in FIG. 8A "management data". The temperature management grade is an example of information indicating the difference between the current temperature of the input article and the set temperature. In the example illustrated in FIG. 8A, if the current temperature of the input article coincides with the set temperature, the temperature management grade is determined as "A", and as the difference between the current temperature of the input article and the set temperature increases, the temperature management grade is changed as "A", "B", and "C".

The article data creating unit 50 inputs the determined temperature management grade into the article data item in FIG. 8A in "temperature grade management" of "current position management". The article data creating unit 50 determines the time until the temperature management grade is raised as the time required for rearrangement. For example, if the current temperature of the input article is the normal temperature, the article data creating unit 50 determines the time until the temperature management grade is raised to 5 hours (5hr).

The article data creating unit 50 inputs the time until the determined temperature management grade is raised (time required for rearrangement) into the article data item in FIG. 8A "current position scheduled storage time" in "rearrangement management".

In step S22, the article data creating unit 50 confirms the vacant shelf 32 corresponding to the set temperature and temperature management grade of the input article, based on the shelf management data in FIG. 8B. FIG. 8B is an example of the shelf management data, in which each shelf 32 has a shelf address number, a set temperature, a temperature management grade, and a state that are set as items.

The item "shelf address number" of the shelf management data in FIG. 8B is an example of identification information identifying the shelf 32. The item "set temperature" indicates the set temperature of the shelf 32. The item "temperature management grade" indicates the temperature management grade of the article to be input for storage on the shelf 32. The item "state" is an example of information that identifies the state of the shelf 32 as being in use, input reserved, or vacant.

In step S24, the article data creating unit 50 selects one vacant shelf 32 for storing the input article from the vacant shelf 32 that corresponds to the set temperature and temperature management grade of the input article. For example, in the example of FIG. 8B, the vacant shelf 32 that corresponds to the set temperature "5 °C" and temperature management grade "C" of the input article is selected, and the state of the shelf 32 is updated from "vacant" to "in use". The article data creating unit 50 inputs the shelf address number of the vacant shelf 32 for storing the input item, in the article data item in FIG. 8A "shelf address number" in "current position management".

By the processing of steps S10 to S24, the article data of FIG. 8A is added to the article DB 46 as illustrated in FIG. 8C. The rearrangement monitoring unit 52 of the overall management device 22 manages the rearrangement of the articles in the shelf 32 based on the article data and the shelf management data illustrated in FIGS. 8A to 8C. The item "final scheduled storage position" of the article data indicates the temperature management grade of the shelf 32 where the finally input article is scheduled to be stored. The item "cumulative elapsed time " of the article data indicates the elapsed time from when the input article was stored in the current shelf 32.

In step S26, the arrangement determining unit 40 specifies the "shelf address number" in the item "current position management" of the article data and instructs to execute the conveying of the input article. In step S28, the automatic conveyance device 24 conveys the input article to the specified shelf 32 in accordance with the conveyance execution instruction from the overall management device 22. When the conveying of the input article to the specified shelf 32 is completed, the automatic conveyance device 24 reports, to the overall management device 22, the completion of the conveying of the input article to the specified shelf 32.

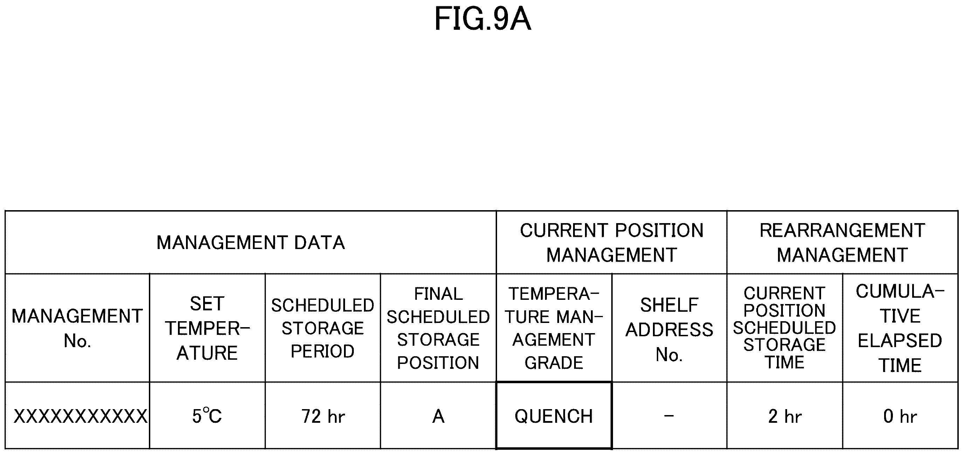

The article data and the shelf management data in FIGS. 8A to 8C are examples in which "A" to "C" are provided as the temperature management grades. The article data and the shelf management data in FIGS. 9A to 9C are examples in which "quench" is provided in addition to "A" to "C" as a temperature management grade. Processing in the case of the article data and the shelf management data in FIGS. 9A to 9C will be described in accordance with the inputting processing procedure in FIG. 7.

The processing of steps S10 to S18 is the same as that in the case of the article data and the shelf management data of FIGS. 8A to 8C. In step S20, the article data creating unit 50 of the overall management device 22 inputs the reported basic information into "management number", "set temperature", and "scheduled storage period" in the article data item "management data" of FIG. 9A.

The article data creating unit 50 determines that the temperature management grade is "quench" if the current temperature of the input article indicated by the received temperature data is normal temperature. If the current temperature of the input article indicated by the received temperature data is not normal temperature, the article data creating unit 50 determines the temperature management grade in a similar manner as in the case of the article data and the shelf management data illustrated in FIGS. 8A to 8C. Here, the processing when the temperature management grade is determined to be "quench" will be described.

The article data creating unit 50 inputs the determined temperature management grade into "temperature grade management" of the article data item "current position management" in FIG. 9A. The article data creating unit 50 determines the time until the temperature management grade is raised as the time required for rearrangement. In FIG. 9A, the time until the temperature management grade is raised is determined to be 2 hours (2hr).

The article data creating unit 50 inputs the time until the determined temperature management grade is raised (time required for rearrangement) into the "current position scheduled storage time" of the article data item "rearrangement management" in FIG. 9A.

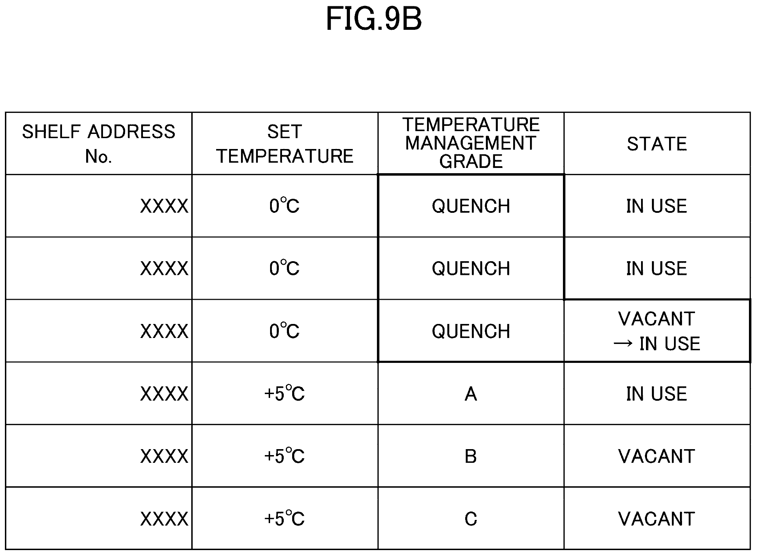

In step S22, the article data creating unit 50 confirms the vacant shelf 32 corresponding to the set temperature and temperature management grade of the input article, based on the shelf management data in FIG. 9B. FIG. 9B illustrates an example of the shelf management data, and in the same manner as the shelf management data in FIG. 8B, the shelf address number, the set temperature, the temperature management grade, and the state are set as items for each shelf 32. The item "temperature management grade" of the shelf management data in FIG. 9B indicates quench, A, B, and C as the temperature management grades of the article received for storage on the shelf 32.

In step S24, the article data creating unit 50 selects one vacant shelf 32 for storing the input article from among the vacant shelves 32 corresponding to the set temperature and temperature management grade of the input article. For example, in the example of FIG. 9B, the vacant shelf 32 corresponding to the set temperature "0 °C" and the temperature management grade "quench" of the input article is selected, and the state of the shelf is updated from "vacant" to "in use". The article data creating unit 50 inputs the shelf address number of the vacant shelf 32 on which the input article is to be stored, in "shelf address number" of the item "current position management" in the article data illustrated in FIG. 9A.

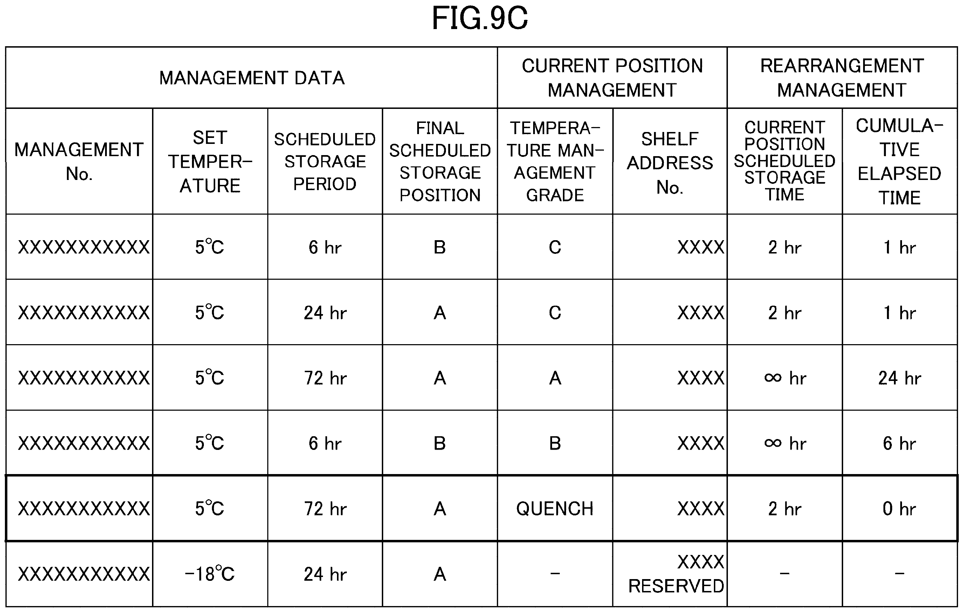

By the processing of steps S10 to S24, the article data illustrated in FIG. 9A is added to the article DB 46 as illustrated in FIG. 9C. The rearrangement monitoring unit 52 of the overall management device 22 manages the rearrangement of the articles on the shelf 32 based on the article data and the shelf management data illustrated in FIGS. 9A to 9C.

In step S26, the arrangement determining unit 40 specifies the "shelf address number" of the item "current position management" of the article data, and instructs to execute conveyance of the input article to the shelf 32 whose temperature management grade is "quench". In step S28, the automatic conveyance device 24 conveys the input article to the specified shelf 32 in accordance with the convey execution instruction from the overall management device 22. When the conveying of the input article to the specified shelf 32 is completed, the automatic conveyance device 24 reports, to the overall management device 22, the completion of the conveying of the input article to the specified shelf 32.

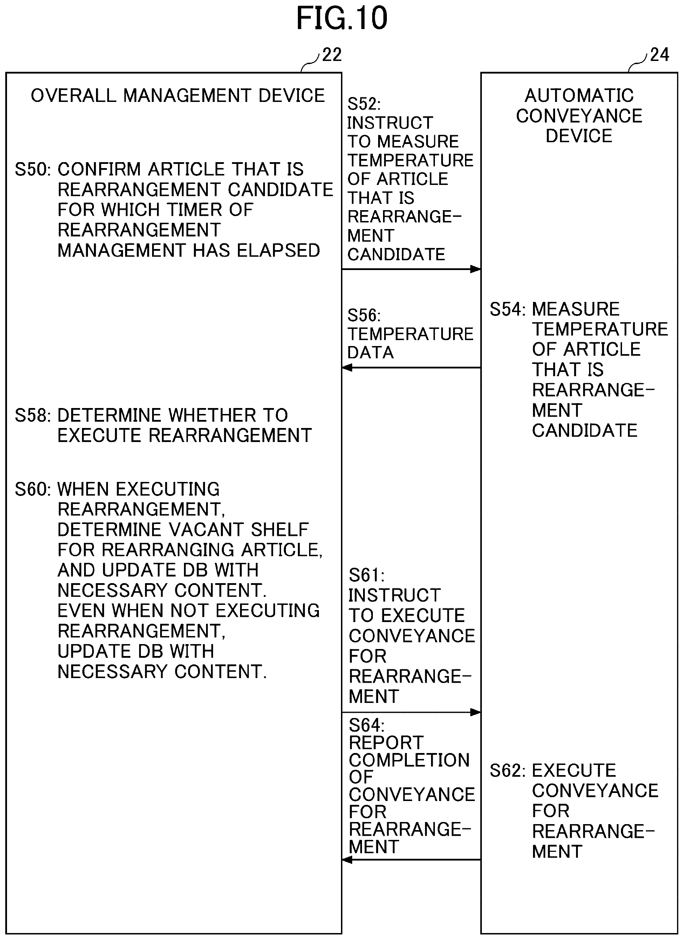

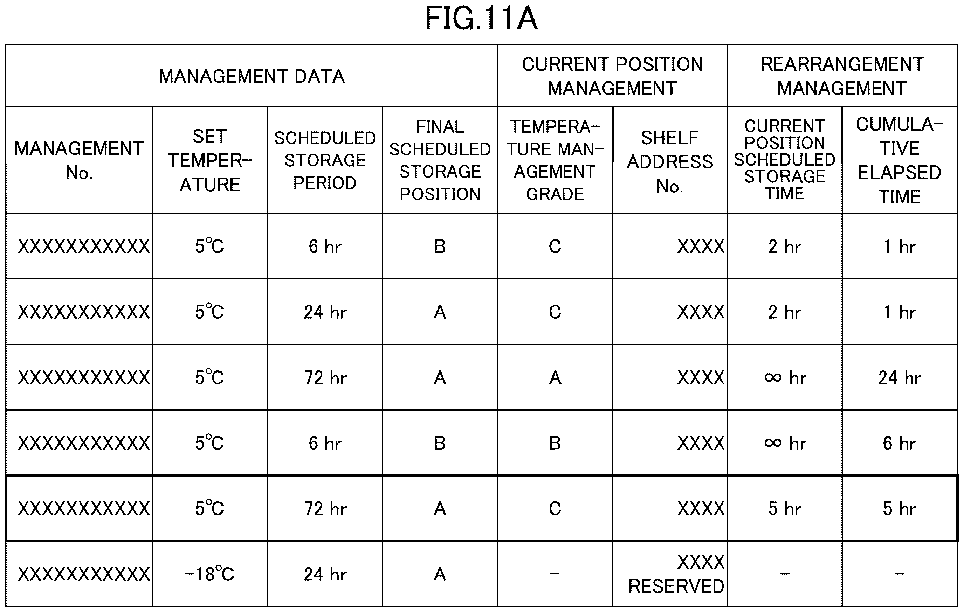

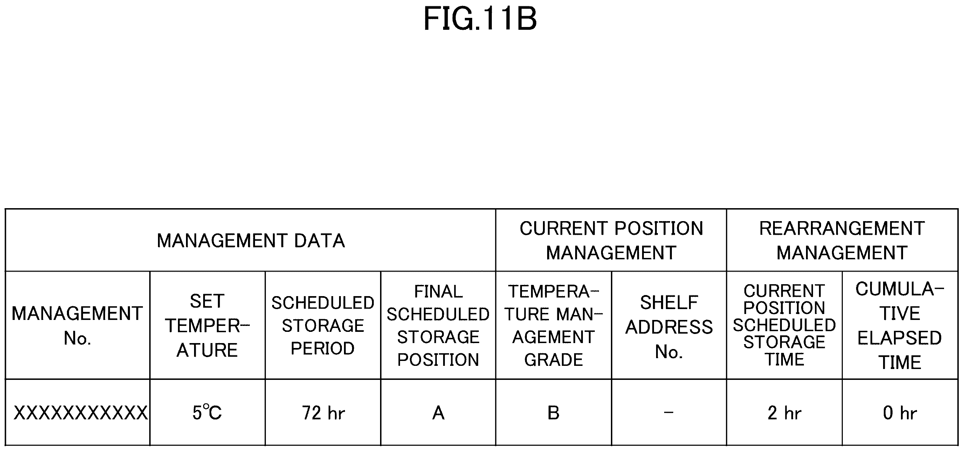

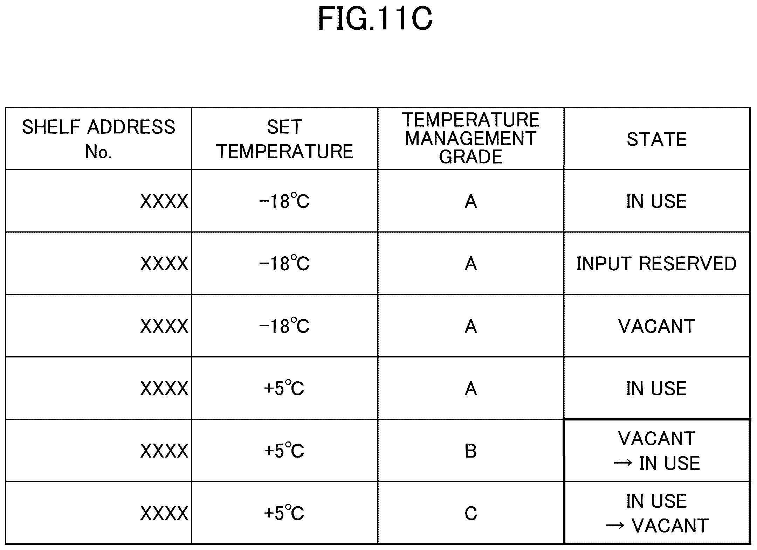

Next, the article rearrangement processing executed in the storage 1 according to the present embodiment will be described. FIG. 10 is an explanatory diagram illustrating an example of the article rearrangement processing procedure in the storage according to the present embodiment. FIG. 11A is a configuration diagram of an example of article data. FIG. 11B is a configuration diagram of an example of article data. FIG. 11C is a configuration diagram of an example of shelf management data.

The rearrangement monitoring unit 52 of the overall management device 22 of the storage 1 monitors the article data recorded in the article DB 46 of FIG. 11A. The rearrangement monitoring unit 52 confirms the article in the article data whose cumulative elapsed time has reached the current position scheduled storage time, as an article that is a rearrangement candidate whose timer of rearrangement management has elapsed, based on the "current position scheduled storage time" and the "cumulative elapsed time" of the article data item "rearrangement management".

In step S52, the overall management device 22 specifies, for example, the shelf 32 of the "shelf address number" in the item "current position management" of FIG. 11A, and instructs the automatic conveyance device 24 to measure the temperature of the article that is a rearrangement candidate. In step S54, the temperature sensor 60 of the automatic conveyance device 24 measures the temperature of the article that is a rearrangement candidate. In step S56, the temperature sensor 60 transmits the temperature data of the article that is a rearrangement candidate to the overall management device 22.

In step S58, the rearrangement monitoring unit 52 determines whether the article that is a rearrangement candidate is can be rearranged, based on the received temperature of the article that is a rearrangement candidate. For example, the rearrangement monitoring unit 52 does not rearrange the article that is a rearrangement candidate if the received temperature of the article that is a rearrangement candidate is not lowered to a temperature such that the temperature management grade is raised, and updates the article data of the article that is a rearrangement candidate to extend the "current position scheduled storage time".

For example, the rearrangement monitoring unit 52 determines that the article that is a rearrangement candidate will be rearranged if the received temperature of the article that is a rearrangement candidate is lowered to a temperature such that the temperature management grade is raised. When it is determined that the article will be rearranged, the rearrangement monitoring unit 52 updates the temperature management grade of the article that is a rearrangement candidate from "C" to "B" as in the article data of FIG. 11B. Further, the rearrangement monitoring unit 52 determines the time until the temperature management grade of the article is upgraded to the next grade as the time required until the next rearrangement, and updates the current position scheduled storage time of the article that is a rearrangement candidate to "2 hr" as in the article data of FIG. 11B.

The rearrangement monitoring unit 52 confirms the vacant shelf 32 corresponding to the set temperature and the temperature management grade of the article that is the rearrangement candidate, from the shelf management data of FIG. 11C. The rearrangement monitoring unit 52 selects one vacant shelf 32 for storing the article that is the rearrangement candidate, from the vacant shelves 32 corresponding to the set temperature and the temperature management grade of the article that is the rearrangement candidate. For example, in the example of FIG. 11C, the vacant shelf 32 corresponding to the set temperature "5 °C" and the temperature management grade "B" of the article that is the rearrangement candidate is selected, and the state of the shelf 32 is updated from "vacant" to "in use". In the example of FIG. 11C, the state of the shelf 32 storing the article that is the rearrangement candidate is updated from "in use" to "vacant". The rearrangement monitoring unit 52 inputs the shelf address number of the shelf 32 after change, to which the article that is the rearrangement candidate is to be moved, in the "shelf address number" of the item "current position management" in the article data of FIG. 11B.

By the processing of steps S50 to S60, the article data of the article that is the rearrangement candidate is updated, for example, from FIG. 11A to FIG. 11C. In step S61, the arrangement determining unit 40 specifies the "shelf address number" of the item "current position management" of the article data and instructs the execution of conveying the article that is the rearrangement candidate.

In step S62, the automatic conveyance device 24 conveys the article that is the rearrangement candidate to the specified shelf 32 in accordance with the conveyance execution instruction from the overall management device 22. When the conveyance of the article that is the rearrangement candidate to the specified shelf 32 is completed, the automatic conveyance device 24 reports, to the overall management device 22, the completion of the conveyance of the article that is the rearrangement candidate to the specified shelf 32.

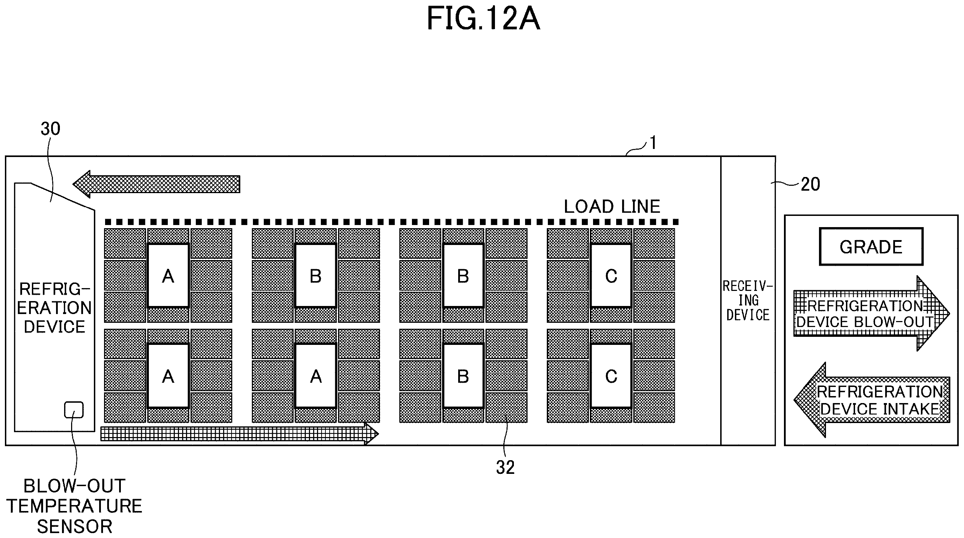

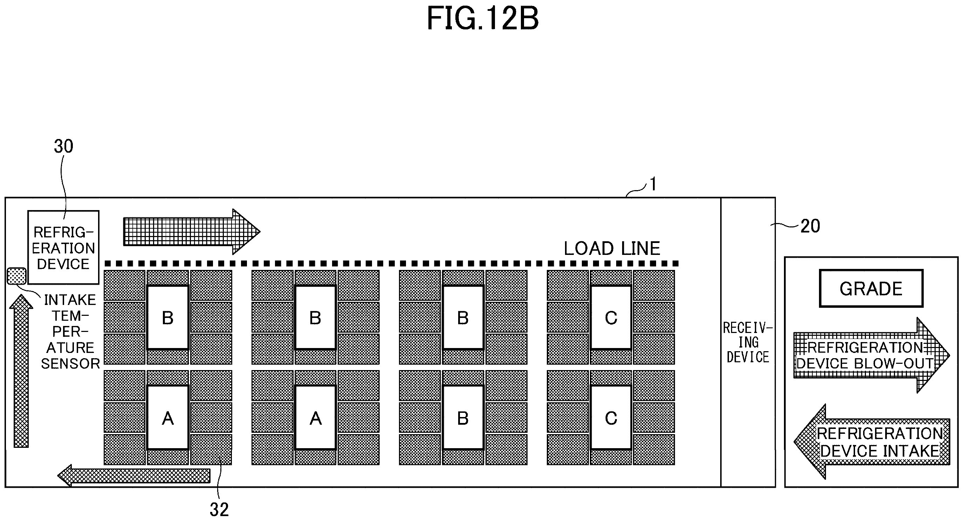

The temperature management grade described above may be automatically determined by the overall management device 22 based on the difference between the set temperature and the current temperature of the article to be stored, or may be customized by a manager or the like. The storage environment order for the temperature management grade may be set as illustrated in FIGS. 12A and 12B, for example.

FIGS. 12A and 12B are explanatory diagrams illustrating examples of setting the temperature management grade. FIG. 12A illustrates an example in which the blow-out of the refrigeration device 30 is provided on the lower side and the intake of the refrigeration device 30 is provided on the upper side. In the refrigeration device 30 illustrated in FIG. 12A, a blow-out temperature sensor is provided as a control sensor, and the storage environment order A to C can be set in the order of good temperature control properties.

FIG. 12B illustrates an example in which the blow-out of the refrigeration device 30 is provided on the upper side and the intake of the refrigeration device 30 is provided on the lower side. In the refrigeration device 30 illustrated in FIG. 12B, an intake temperature sensor is provided as a control sensor, and the blow-out temperature becomes lower than the set temperature, and, therefore, the storage environment order A to C can be set in the order of temperature control properties. In the example illustrated in FIG. 12B, excessive cooling can be avoided for long-term storage, for example.

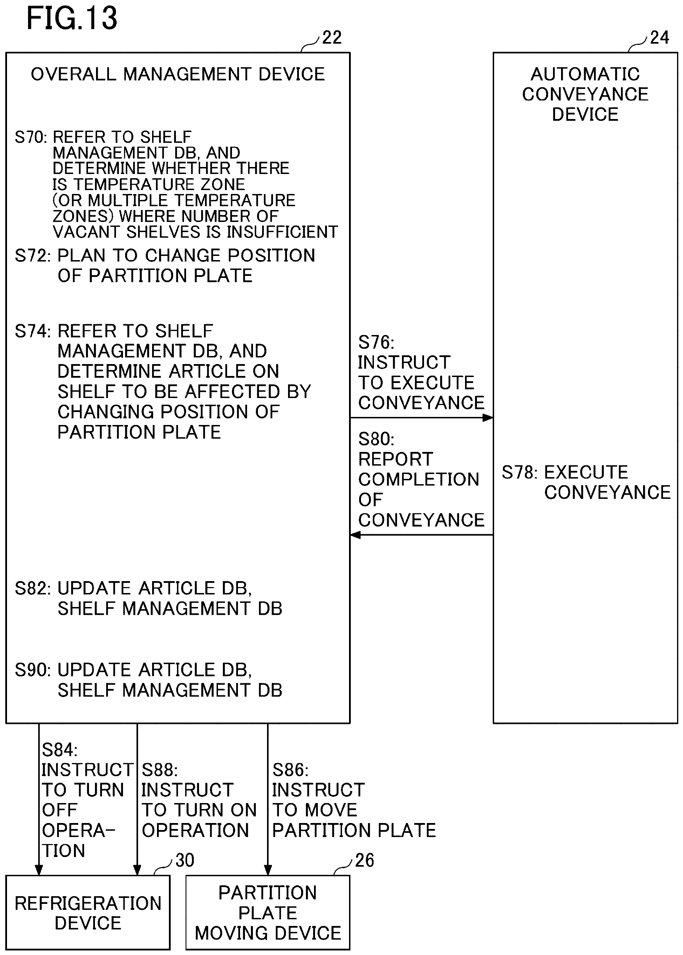

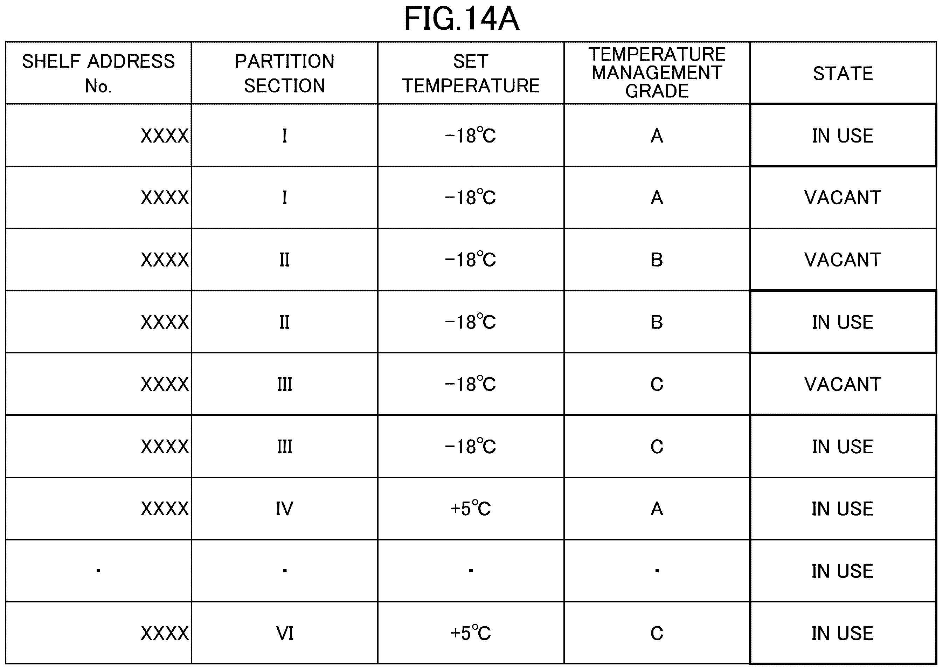

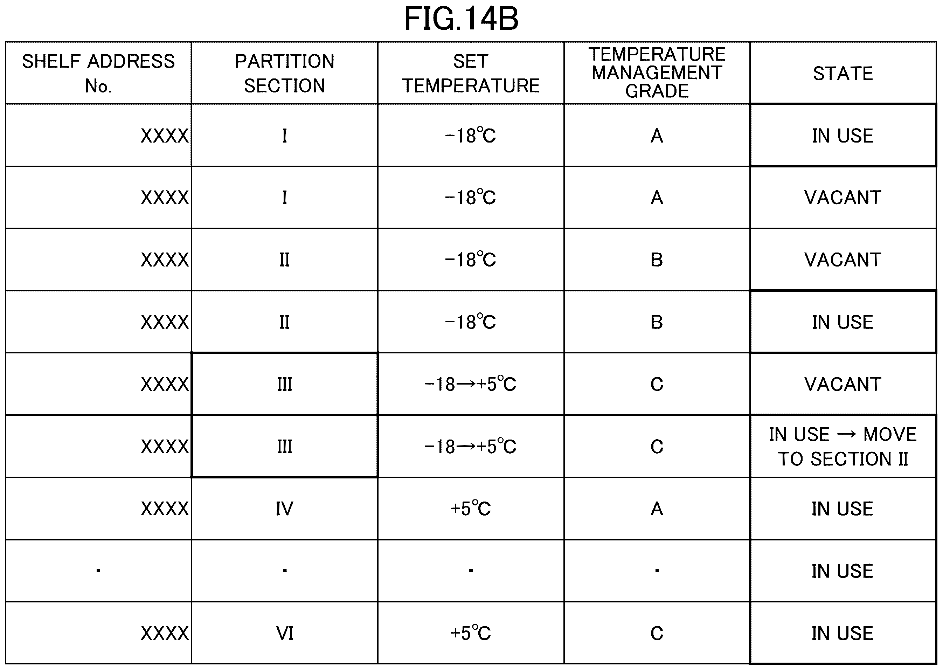

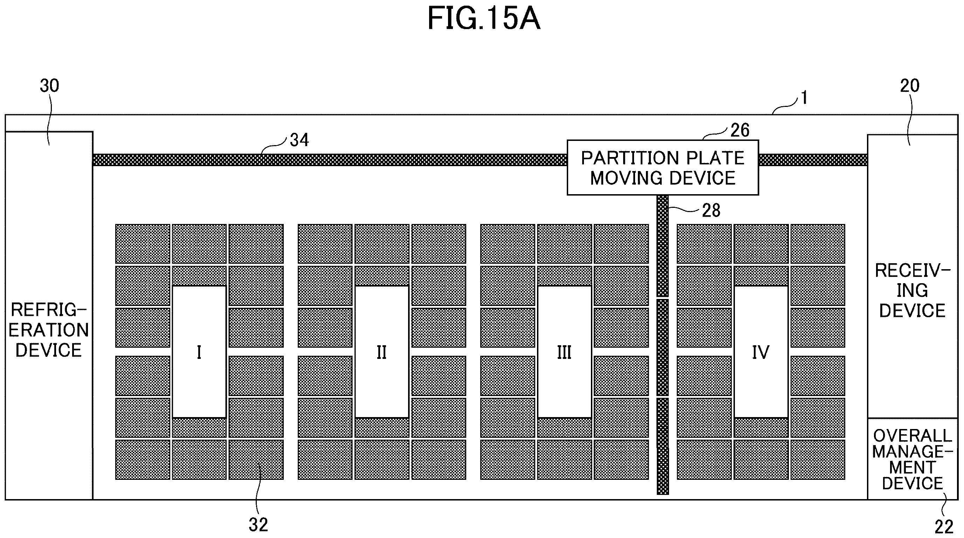

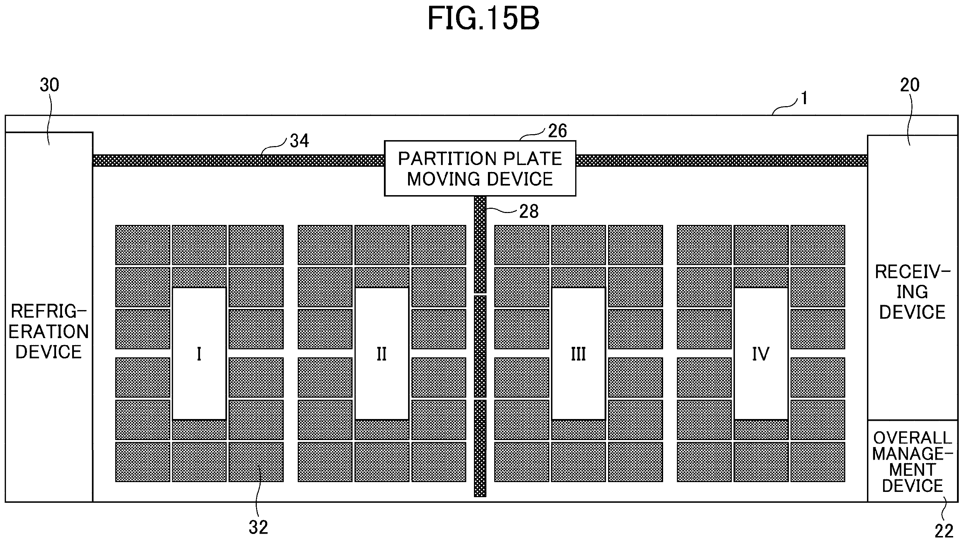

Next, a process for adjusting the remaining space of the storage area executed in the storage 1 according to the present embodiment will be described. FIG. 13 is an explanatory diagram illustrating an example of an adjustment processing procedure of the storage area of the storage according to the present embodiment. FIGS. 14A and 14B are configuration diagrams of an example of shelf management data. FIGS. 15A and 15B are explanatory diagrams of an example of the movement of the partition plate of the storage according to the present embodiment.

In the storage 1 of FIGS. 15A and 15B, partition sections I to IV are set in the storage areas for the processing of adjusting the remaining space in the storage area. In the examples of FIGS. 15A and 15B, a gap for installing the partition plate 28 is provided between partition sections I and II, between partition sections II and III, and between partition sections III and IV. The partition plate moving device 26 and the temperature adjusting device 27 of FIGS. 15A and 15B described later move along the rail 34, and the installation position of the partition plate 28 can be moved as described later. In the shelf management data recorded in the shelf management DB 44 of FIGS. 14A to 14C, an item "partition section" is added to the above shelf management data in order to associate each shelf 32 with a partition section.

The remaining space managing unit 42 of the overall management device 22 of the storage 1 monitors the shelf management data recorded in the shelf management DB 44 of FIG. 14A. The remaining space managing unit 42 of the storage 1 having two temperature zones (or multiple temperature zones) refers to the shelf management data in step S70 to determine whether there is a temperature zone in which the number of vacant shelves 32 is insufficient.

For example, if the two temperature zones illustrated in FIG. 15A are set by the partition plate 28 and the shelf management data is the shelf management data illustrated in FIG. 14A, the remaining space managing unit 42 determines that the number of vacant shelves 32 in the temperature zone of the partition section IV is below the reference number.

In step S72, the remaining space managing unit 42 plans to change the position of the partition plate 28 for moving the partition plate 28 between the partition sections III and IV installed as illustrated in FIG. 15A, to between the partition sections II and III as illustrated in FIG. 15B. According to the plan, the remaining space managing unit 42 plans to change the set temperature of the partition section III as illustrated in FIG. 14B.

In step S74, the position information output unit 54 refers to the shelf management DB 44 to determine the articles on the shelf 32 that will be affected by the change of the position of the partition plate 28. The shelf 32 affected by the change of the position of the partition plate 28 is, for example, a partition section whose temperature zone changes, for example, the partition section III of FIGS. 15A and 15B. In the case of the shelf management data of FIG. 14A, articles are stored on the shelf 32 in the partition section III, and, therefore, the position information output unit 54 determines the movement of the articles from the partition section III to the partition section II of the original temperature zone, as in the shelf management data of FIG. 14B.

In step S76, the arrangement determining unit 40 instructs the execution of conveyance of the articles stored on the shelf 32 in the partition section III, to move these articles to the shelf 32 in the partition section II in accordance with the plan of the remaining space managing unit 42.

In step S78, the automatic conveyance device 24 conveys the articles stored on the shelf 32 in the partition section III to the shelf 32 in the partition section II in accordance with the convey execution instruction from the overall management device 22. When the conveyance of the articles to the shelf 32 in the partition section II is completed, the automatic conveyance device 24 reports the completion of conveyance to the overall management device 22. In step S82, the arrangement determining unit 40 updates the article data of the article DB 46 and the shelf management data of the shelf management DB 44 in accordance with the report from the automatic conveyance device 24.

In step S84, before changing the position of the partition plate 28, the overall management device 22 instructs the refrigeration device 30 to turn the operation off and stops the operation of the refrigeration device 30. In step S86, the position information output unit 54 of the overall management device 22 outputs the position information of the partition plate 28 to the partition plate moving device 26, and instructs the movement of the partition plate 28 to remove the partition plate 28 between the partition sections III and IV and to install the partition plate 28 between the partition sections II and III.

The partition plate moving device 26 moves the partition plate 28 to a position between the partition sections II and III as illustrated in FIG. 15B in accordance with the movement instruction of the partition plate 28 from the overall management device 22. In step S88, after changing the position of the partition plate 28, the overall management device 22 instructs the refrigeration device 30 to turn the operation on and resumes the operation of the refrigeration device 30.

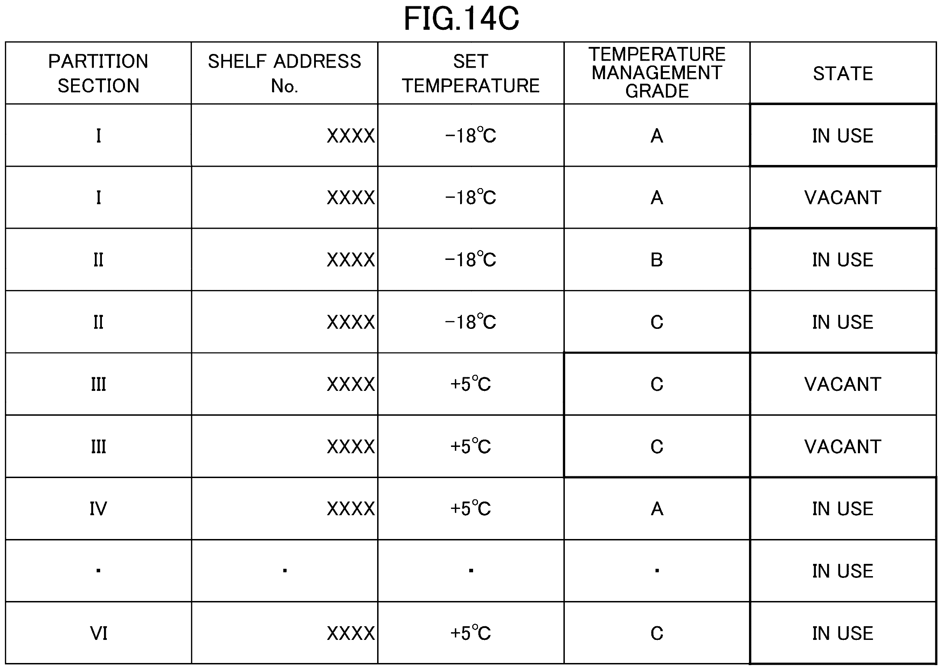

In step S90, the remaining space managing unit 42 updates the article data of the article DB 46 and the shelf management data of the shelf management DB 44 in accordance with the change of the position of the partition plate 28. In the example illustrated in FIGS. 15A and 15B, the temperature zone in the partition section III is changed, and for example, the use of the partition section III may be prohibited for a certain period of time, or the temperature management grade may be set low as illustrated in FIG. 14C. After a certain period of time has elapsed, the temperature management grade of the partition section III is changed to the temperature management grade according to the position of the partition section.

The temperature management grade of the partition section after the position of the partition plate 28 has been changed may be automatically assigned as follows, for example, based on the difference between the temperature of the temperature sensor installed in the partition section and the set temperature of the partition section.

Temperature management grade A: 1 °C or less × 1 hour duration
Temperature management grade C: 2 °C or more × 1 hour duration
Temperature management grade B: Other than temperature management grades A and C

The temperature management grade of the partition section after changing the position of the partition plate 28 may be set by a manager or the like. It is assumed that the difference between the temperature of the shelf 32 and the set temperature is large for a certain time after changing the position of the partition plate 28, and, therefore, even if the position corresponds to the original temperature management grade A, a use prohibition time may be provided, or the temperature management grade may be set low for a certain time.

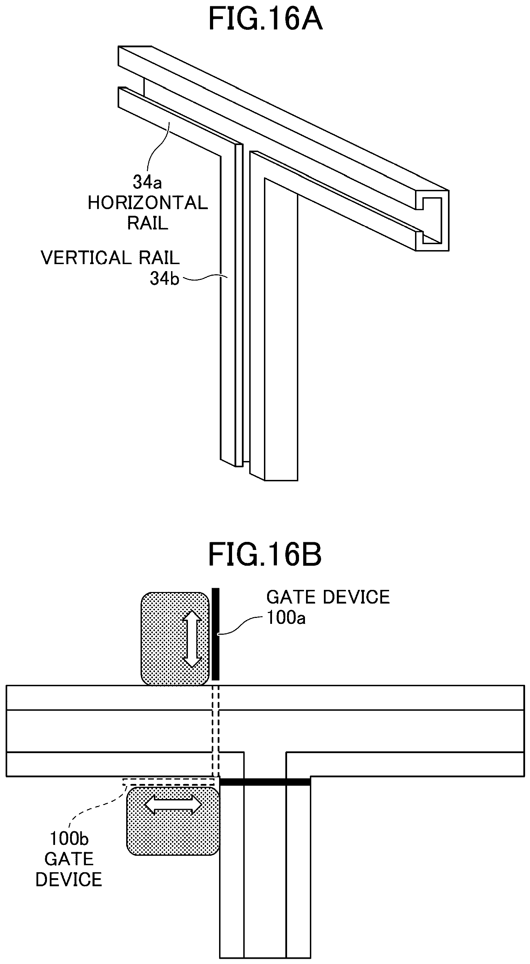

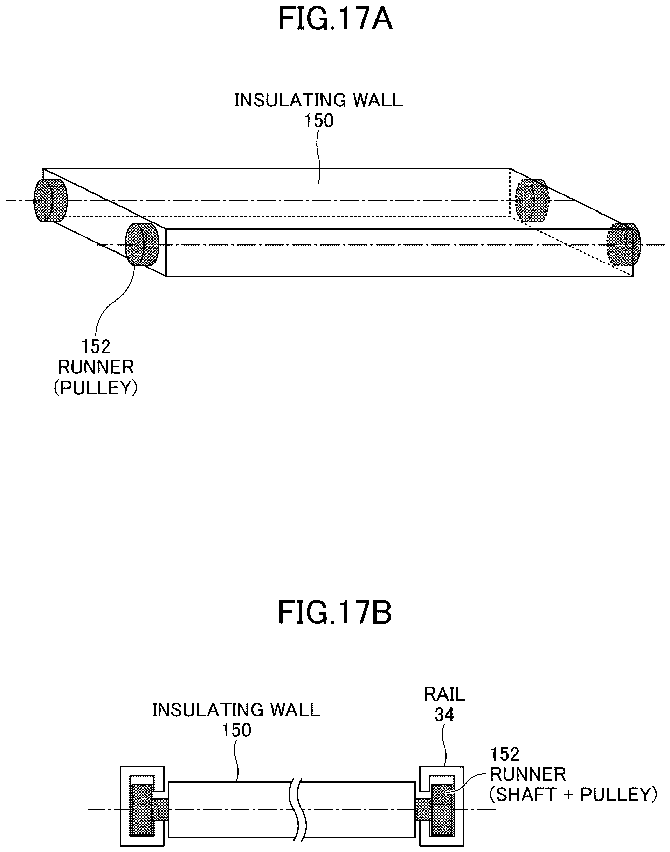

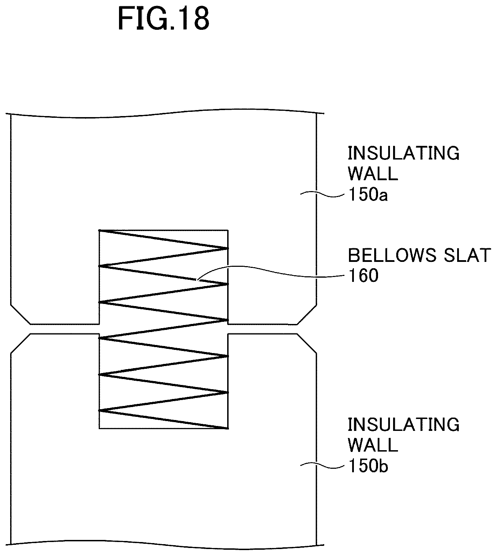

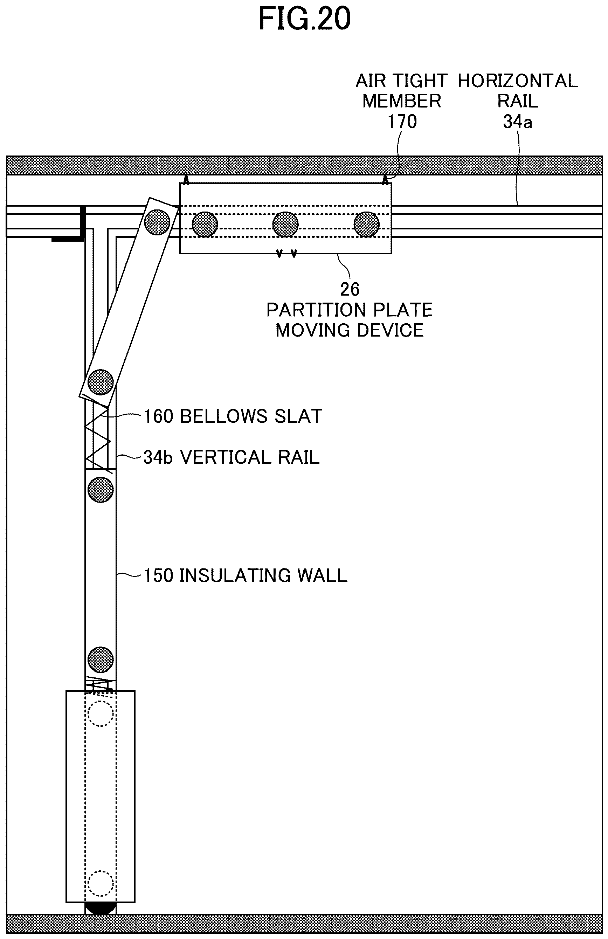

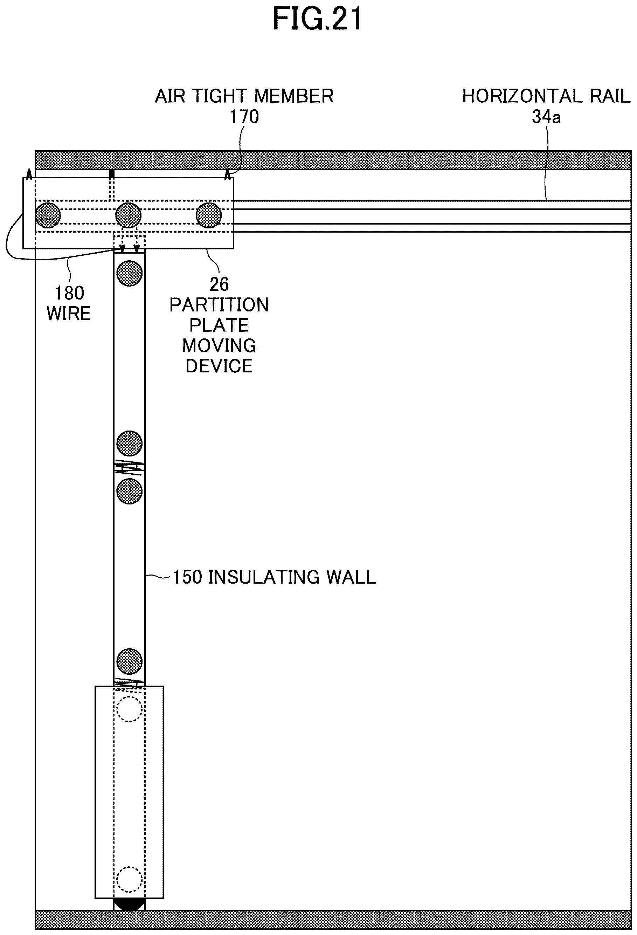

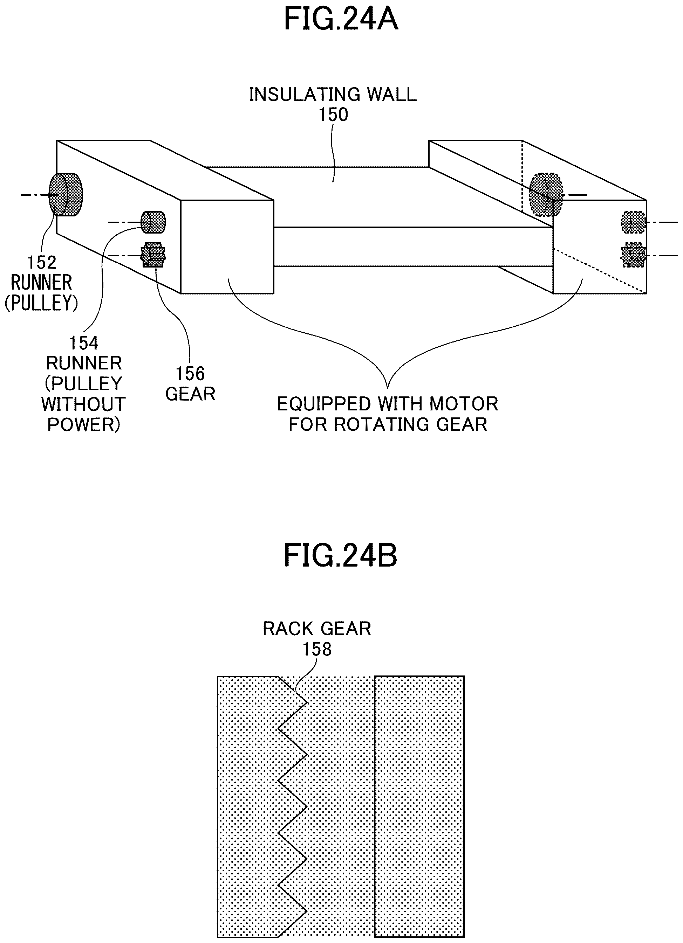

The position of the partition plate 28 is changed by, for example, the following mechanism. FIGS. 16A and 16B are explanatory diagrams of an example of the mechanism for changing the position of the partition plate. FIGS. 17A and 17B are explanatory diagrams of an example of the mechanism for changing the position of the partition plate. FIGS. 18 to 23 are explanatory diagrams of an example of the mechanism for changing the position of the partition plate. FIGS. 24A to 24C are explanatory diagrams of an example of the mechanism for changing the position of the partition plate. To change the position of the partition plate 28, rails 34 including a horizontal rail 34a and a vertical rail 34b as illustrated in FIG. 16A are used. Gate devices 100a and 100b illustrated in FIG. 16B are attached to the T-shaped portion of the rails 34.

The gate device 100a can electrically move the plate so as to insert the plate in the rail direction, thereby limiting the movement of the partition plate 28 in the horizontal direction. Further, the gate device 100b can electrically move the plate so as to insert plate in the rail direction, thereby limiting the movement of the partition plate 28 in the vertical direction. By managing the gate devices 100a and 100b, the vertical rail 34b to which the partition plate 28 is to be lowered can be selected, and the installation position of the partition plate 28 can be controlled. For example, in the T-shaped portion of the vertical rail 34b to which the partition plate 28 is to be lowered, the plate of the gate device 100a is inserted in the rail direction, and the plate of the gate device 100b is not inserted in the rail direction.

The partition plate 28 is implemented by an insulating wall 150 having a runner 152 as illustrated in FIG. 17A. The insulating wall 150 having the runner 152 is has a positional relationship with the rails 34 as illustrated in FIG. 17B and is movable along the rail 34.

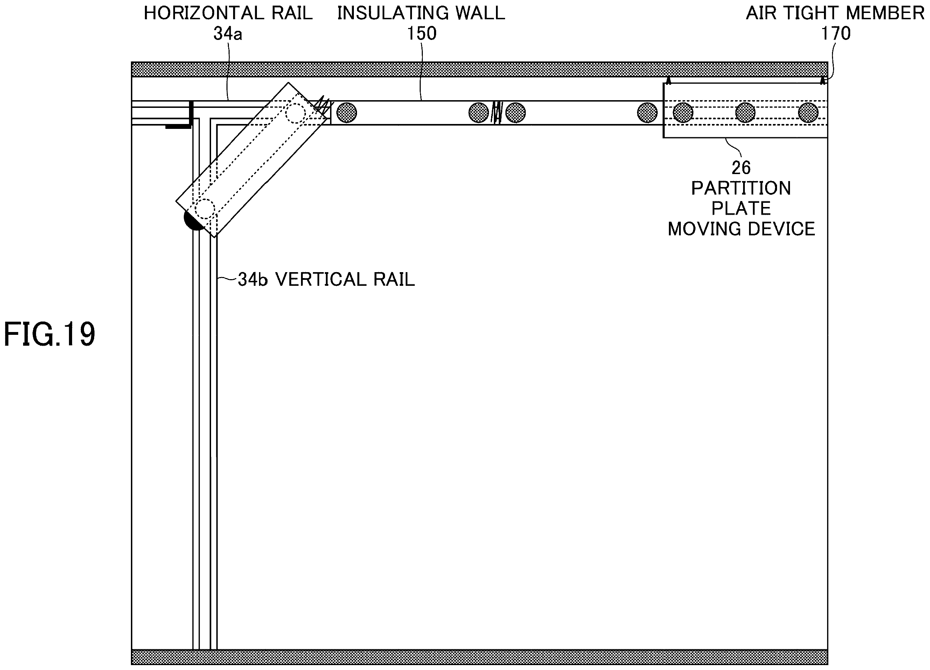

The partition plate 28 has a plurality of the insulating walls 150 illustrated in FIG. 17A connected by a bellows slat 160 as illustrated in FIG. 18B. The insulating walls 150a and 150b illustrated in FIG. 18B are connected by the bellows slat 160, so that the T-shaped portion of the rails 34 illustrated in FIG. 16A can be bent from the horizontal rail 34a to the vertical rail 34b as illustrated in FIGS. 19 to 21.

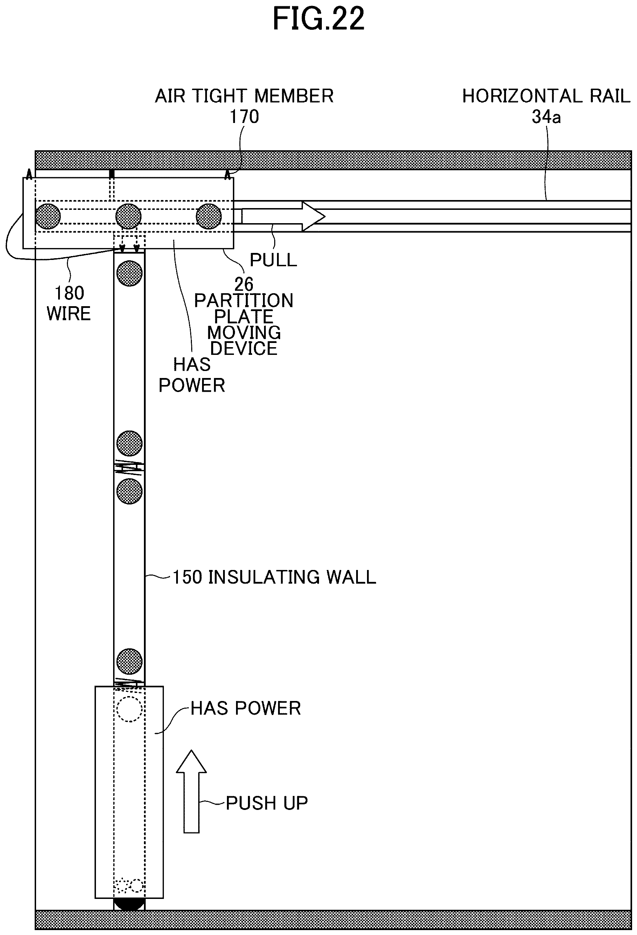

The partition plate 28 in the installed state is removed as follows. The partition plate 28 in the installed state as illustrated in FIG. 22 is pulled up from the vertical rail 34b to the horizontal rail 34a by the pulling force of the partition plate moving device 26 having power and the pushing force of the insulating wall 150 at the lowest part having power. The partition plate moving device 26 and the insulating wall 150 are connected by a wire 180.

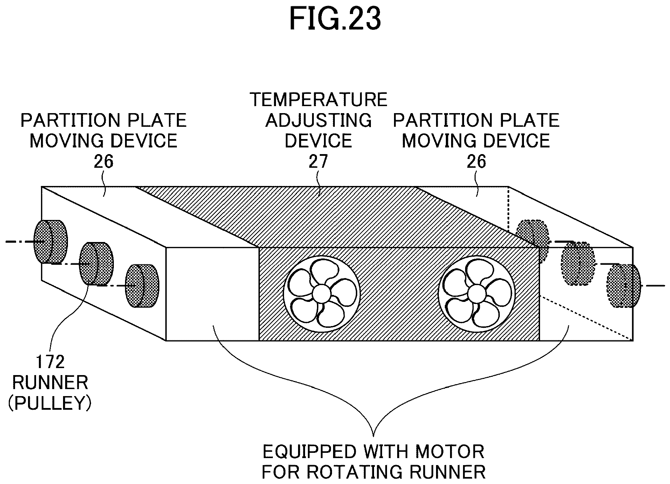

The partition plate moving device 26 is installed on both sides of the temperature adjusting device 27, for example, as illustrated in FIG. 23, and moves integrally with the temperature adjusting device 27. The partition plate moving device 26 incorporates a motor for rotating a runner 172. Therefore, the partition plate moving device 26 can move along the horizontal rail 34a. The temperature adjusting device 27 adjusts the air flow amount or exchanges heat between the two temperature zones.

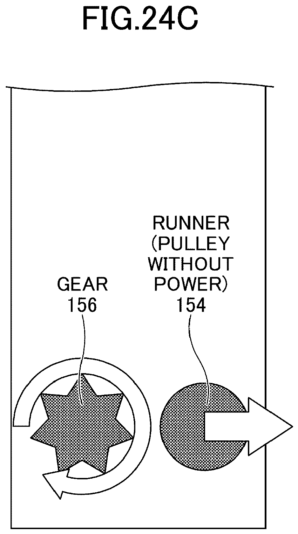

The lowest insulating wall 150 having power is configured as illustrated in FIG. 24, for example. The lowest powered thermal insulation wall 150 includes a runner 152, a runner 154, and a gear 156, as illustrated in FIG. 24A, and a built-in motor rotates the gear 156. For example, a rack gear 158 is provided on one side of the vertical rail 34b, as illustrated in FIG. 24B. As illustrated in FIG. 24C, the runner 154 is pushed against the vertical rail 34b on the opposite side of the rack gear 158, for example, by a spring. Thus, the lowest thermal insulation wall 150 with power can move up the vertical rail 34b, allowing the partition plate 28 to be pushed up along the vertical rail 34b.

Although the present embodiment has been described above, it will be appreciated that various changes in form and details are possible without departing from the purpose and scope of the claims. The storage areas (temperature zones) of a plurality of set temperatures can be divided into, for example, a quenching area close to the refrigeration device 30 and a storage area far from the refrigeration device 30, so that the temperature of the article that is not cooled in advance can be lowered and then stored in the storage region. Therefore, the storage 1 of the present embodiment can prevent the article that is not cooled in advance from affecting the temperature of the stored article.

Further, by dividing the storage areas (temperature zones) of a plurality of set temperatures into an area for storing the article that is not cooled in advance and an area for storing the article that is cooled in advance, it is possible to prevent the article that is not cooled in advance from affecting the temperature of the stored article. It is conceivable that the area for storing the article that is not cooled in advance and the area for storing the article that is cooled in advance can be divided into left and right with respect to the wind direction of the refrigeration device 30.

Further, the area for storing the article that is not cooled in advance is located downwind where the temperature distribution is not good and away from the refrigeration device 30, and, therefore, the storage 1 of the present embodiment can prioritize the temperature management for the article that is cooled in advance.

Furthermore, by using the information on the article read by the information reading sensor 62, it is also possible to store items with a high unit price, such as high-grade articles, or items with a long scheduled storage period, etc., on the shelf 32 where the temperature is less uneven. Further, the arrangement of the article in the storage area may be determined such that it is easy to take out items that that are close to the expiration date.

Furthermore, the temperature sensor 60 is provided in the automatic conveyance device 24 of the storage 1 according to the present embodiment, and, therefore, the temperature unevenness in the storage area can be identified, and the arrangement position of the article can be determined by using the temperature unevenness.

Although the present invention has been described based on the above embodiments, the present invention is not limited to the above embodiments, and various variations are possible within the scope of claims. The present international application is based upon and claims priority to Japanese Patent Application No. 2021-059430 filed on March 31, 2021, the entire content of which are incorporated herein by reference.

### [Reference Signs List]

- 1: storage
- 2: information terminal
- 3: cloud server
- 10: operation panel
- 12: inputting/retrieving port
- 14, 16: door
- 20: receiving device
- 22: overall management device
- 24: automatic conveyance device
- 26: partition plate moving device
- 28: partition plate
- 30: refrigeration device
- 32: shelf
- 34: rail
- 40: arrangement determining unit
- 42: remaining space managing unit
- 44: shelf management DB
- 46: article DB
- 50: article data creating unit
- 52: rearrangement monitoring unit
- 54: position information output unit
- 60: temperature sensor
- 62: information reading sensor

## Claims

1. A storage provided with a temperature adjustment area for storing an article, the storage comprising:
an arrangement determining unit configured to determine an arrangement in the temperature adjustment area, of an article to be stored in the temperature adjustment area or an article that is stored in the temperature adjustment area, according to status information of the temperature adjustment area and a temperature relating to the article.

2. The storage according to claim 1, further comprising:
an automatic conveyance unit configured to arrange the article in the temperature adjustment area, based on the arrangement determined by the arrangement determining unit.

3. The storage according to claim 1 or 2, further comprising:
a partition moving unit configured to move a partition unit that partitions the temperature adjustment area, wherein
the status information of the temperature adjustment area includes information relating to the temperature adjustment area that is partitioned by the partition unit and that changes according to a movement of the partition unit.

4. The storage according to claim 3, further comprising:
a position information output unit configured to output position information of the partition moving unit, based on the arrangement determined by the arrangement determining unit, wherein
the partition moving unit moves the partition unit based on the position information of the partition moving unit.

5. The storage according to claim 2, wherein the automatic conveyance unit is provided with a sensor configured to measure the temperature of the article.

6. The storage according to claim 2 or 5, wherein
the automatic conveyance unit is provided with a sensor configured to read information relating to the article, and
the arrangement determining unit determines the arrangement of the article in the temperature adjustment area in consideration of the information relating to the article.

7. The storage according to any one of claims 1 to 6, wherein the status information of the temperature adjustment area includes at least one of information relating to division of the temperature adjustment area, information relating to a temperature distribution of the temperature adjustment area, or information relating to the article stored in the temperature adjustment area.

8. The storage according to any one of claims 1 to 7, wherein the arrangement determining unit sets an arrangement destination of the article having a temperature that deviates from a set temperature as an area that does not affect the temperature adjustment area, the set temperature being a temperature at which the temperature adjustment area is to be maintained, and the temperature that deviates from the set temperature deviating by greater than or equal to a predetermined value.
